(19) Europäisches Patentamt
European Patent Office
Office européen des brevets

(11) EP 3 397 708 B1

(12) FASCICULE DE BREVET EUROPEEN

(45) Date de publication et mention de la délivrance du brevet:
**08.04.2020 Bulletin 2020/15**

(21) Numéro de dépôt: **16829425.4**

(22) Date de dépôt: **26.12.2016**

(51) Int Cl.:
***C09D 201/10*** (2006.01) ***C09D 163/00*** (2006.01)
***C09D 171/02*** (2006.01) ***C08K 5/17*** (2006.01)
***C08K 5/13*** (2006.01) ***C09D 175/04*** (2006.01)
***C08G 65/336*** (2006.01) *C08G 59/50* (2006.01)

(86) Numéro de dépôt international:
**PCT/FR2016/053670**

(87) Numéro de publication internationale:
**WO 2017/115046 (06.07.2017 Gazette 2017/27)**

# (54) COMPOSITION LIQUIDE POUR MEMBRANE D'ÉTANCHÉITÉ

FLÜSSIGE ZUSAMMENSETZUNG FÜR EINE WASSERDICHTE MEMBRAN

LIQUID COMPOSITION FOR A WATERPROOFING MEMBRANE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2015 FR 1563372**

(43) Date de publication de la demande:
**07.11.2018 Bulletin 2018/45**

(73) Titulaire: **Bostik SA**
**92700 Colombes (FR)**

(72) Inventeurs:
- **BECQUET, Jérémy**
**77550 Moissy Cramayel (FR)**
- **MAYER, André**
**77590 Bois Le Roi (FR)**

(74) Mandataire: **Granet, Pierre**
**ARKEMA France**
**Département Propriété Industrielle**
**420, rue d'Estienne d'Orves**
**92705 Colombes Cedex (FR)**

(56) Documents cités:
**WO-A1-2014/166492 JP-A- 2012 246 665**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

DOMAINE DE L'INVENTION

La présente invention concerne une composition liquide bi-composante qui après réticulation permet d'obtenir une membrane d'étanchéité sur des surfaces destinées à la circulation piétonnière et/ou de véhicule, par exemple pour les terrasses, les balcons, les toitures ou les parkings.

ARRIERE-PLAN TECHNOLOGIQUE

La pose de membranes d'étanchéités sous forme de compositions liquides est désormais bien connue des professionnels de la construction notamment dans les applications toiture où celles-ci sont désormais utilisées comme une alternative aux membranes en feuilles préfabriquées. L'utilisation de compositions liquides permet d'une part de faciliter la pose dans le cas de toitures à géométries complexes et pour les travaux de rénovation et d'autre part, d'obtenir des revêtements d'étanchéité continus souples et transparents qui adhèrent aux substrats.

Les compositions liquides comportent un ou plusieurs composants, le plus souvent à base de polymères synthétiques soit en solution non aqueuse soit en dispersion aqueuse, lesquelles après réticulation forment un film épais imperméable à l'eau. Parmi les polymères synthétiques utilisés, on peut citer les polyuréthanes, les polymères acryliques, les résines époxy ainsi que polymères à terminaisons alkoxysilanes, les polyuréthanes étant les plus fréquemment utilisés.

L'inconvénient de la majorité des membranes liquides est la faible épaisseur de la couche d'application (environ 0,5 mm). La membrane d'étanchéité devant avoir une épaisseur finale d'environ 1,5 à 2 mm, il est nécessaire d'appliquer plusieurs couches successives (3 couches au minimum) ; chaque couche nécessitant plusieurs heures avant de pouvoir appliquer la suivante, plusieurs jours sont donc nécessaires pour réaliser la membrane d'étanchéité.

Le document WO 2014/114639 décrit une composition liquide mono-composant pour membranes d'étanchéité, ladite composition liquide comprenant notamment un polymère polyuréthane fonctionnalisé par des fonctions isocyanate, obtenu à partir d'un polyéther polyol et de diisocyanate de diphénylméthylène. Les membranes obtenues à partir des compositions de ce document ne présentent pas une résistance à la déchirure suffisante et ne permettent pas la circulation des piétons sur la membrane. Il n'est donc pas possible de les appliquer sur des terrasses ou des balcons.

Le document JP 2012-246665 décrit une composition liquide comprenant un polymère organique, une résine époxy et un agent durcisseur des résines époxy de type amine tertiaire phénolique. Ce document illustre des compositions présentant des taux élevés d'agent durcisseur de type amine tertiaire phénolique qui conduisent à des pertes de performances mécaniques de la membrane dans le temps ainsi qu'à un fort jaunissement de celle-ci une fois exposée à la chaleur ou aux ultraviolets.

Le but de la présente invention est de fournir une composition liquide qui après réticulation forme un film étanche présentant des caractéristiques mécaniques satisfaisantes et durables ainsi qu'un aspect visuel convenable, et ceci de façon durable dans le temps.

RESUME DE L'INVENTION

Un premier objet de la présente invention concerne une composition liquide bi-composante comprenant une composition A et une composition B, ladite composition A comprenant :

A1) de 20 à 80% en poids d'au moins un polymère silylé comprenant au moins un, de préférence au moins deux groupements de formule (I) :

$$-Si(R^4)_p(OR^5)_{3-p} \qquad (I)$$

dans laquelle :

- $R^4$ et $R^5$, identiques ou différents, représentent chacun un radical alkyl linéaire ou ramifié comprenant de 1 à 4 atomes de carbone, avec la possibilité que quand il y a plusieurs radicaux $R^4$ (ou $R^5$), ces derniers soient identiques ou différents ;
- p est un nombre entier égal à 0, 1 ou 2 ;

A2) de 3 à 9% en poids d'un mélange d'au moins deux catalyseurs distincts (A2-1) et (A2-2) de type aromatique, le catalyseur (A2-1) étant de type phénolique substitué par au moins une fonction $-(CH_2)-N(R^7R^8)$, où $R^7$ et $R^8$ représentent, indépendamment l'un de l'autre, un radical alkyle linéaire ou ramifié comprenant de 1 à 4 atomes de

carbone ;
A3) de 0,1 à 2% en poids d'au moins un agent de couplage entre le polymère silylé présent dans la composition A et la résine époxy présente dans la composition B ;

et ladite composition B comprenant :

B1) de 10 à 40% en poids d'au moins une résine époxy ;
B2) de 0,2 à 3% en poids d'au moins un catalyseur pour la condensation de silanol ;
les pourcentages en poids étant exprimés par rapport au poids total de la composition liquide,
le mélange d'au moins deux catalyseurs (A2-1) et (A2-2) étant choisi de sorte que les deux relations suivantes sont respectées :

$$(1)\ 48{,}00\ \text{méq/g} \leq \Phi(OH) + \Phi(CH_2\text{-}NR^7R^8) \leq\ 90{,}00\ \text{méq/g}$$

$$(2)\ 0{,}10 \leq \Phi(OH)/\Phi(CH_2\text{-}NR^7R^8) \leq\ 0{,}33$$

dans lesdites relations (1) et (2) :

- $\Phi$(OH) représente le nombre de fonctions -OH portées par un noyau aromatique exprimé en milliéquivalent par gramme de composition liquide ;
- $\Phi(CH_2\text{-}NR^7R^8)$ représente le nombre de fonctions $-CH_2\text{-}NR^7R^8$ portées par un noyau aromatique exprimé en milliéquivalent par gramme de composition liquide.

Selon un mode de réalisation, le polymère silylé répond à l'une des formules (II), (III) ou (IV) :

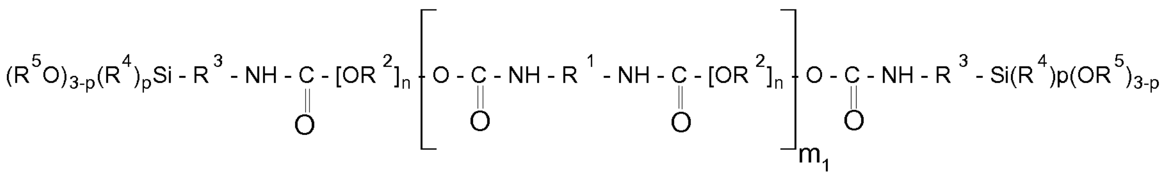

(II)

$$(R^5O)_{3-p}(R^4)_pSi - R^3 - [OR^2]_n - O - R^3 - Si(R^4)_p(OR^5)_{3-p}$$

(III)

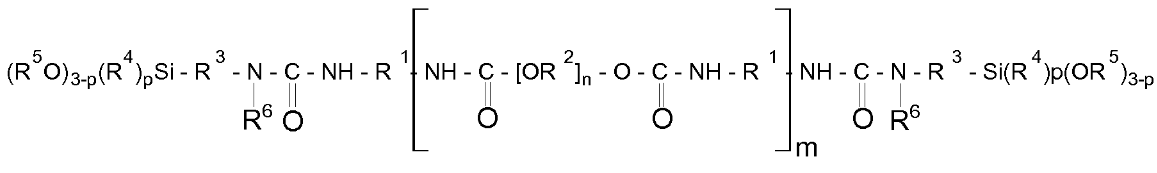

(IV)

dans lesquelles :

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone,
- $R^6$ représente un atome d'hydrogène, un radical phényle ou un radical alkyle linéaire, ramifié ou cyclique comprenant

de 1 à 6 atomes de carbone,

- n est un nombre entier tel que la masse molaire moyenne du bloc polyéther de formule $-[OR^2]_n-$ va de 200 g/mole à 40000 g/mole,
- $m_1$ est zéro ou un nombre entier tel que la masse molaire moyenne du polymère va de 500 g/mole à 50000 g/mole,
- m est un nombre entier différent de zéro tel que la masse molaire moyenne du polymère va de 500 g/mole à 50000 g/mole,
- p est un nombre entier égal à 0, 1 ou 2.

Selon un mode de réalisation de l'invention, le catalyseur (A2-1) comprend au moins un noyau phénolique substitué par au moins deux fonctions $-(CH_2)-N(CH_3)_2$, ces deux fonctions $-(CH_2)-N(CH_3)_2$ étant de préférence en position ortho du groupement OH.

De préférence, le catalyseur (A2-1) est choisi parmi les composés suivants :

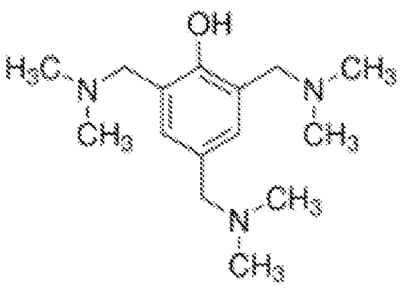

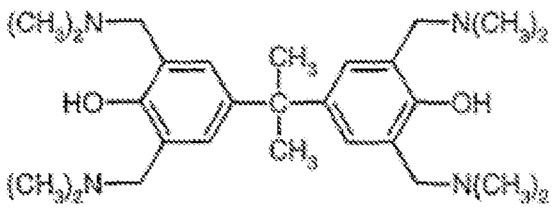

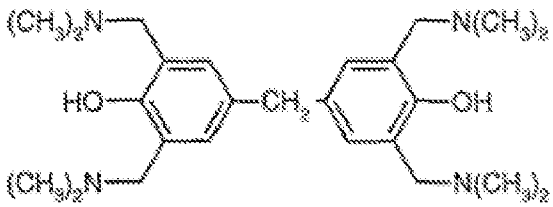

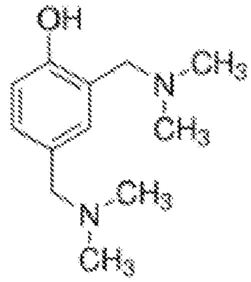

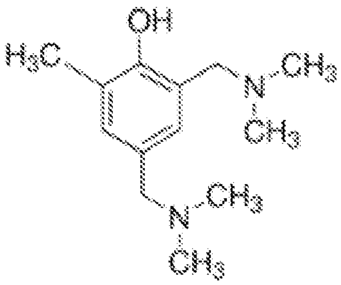

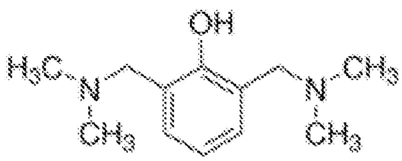

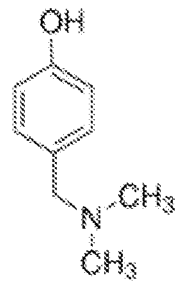

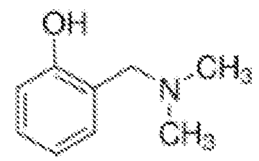

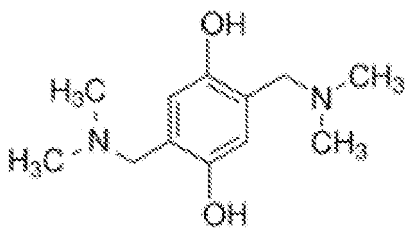

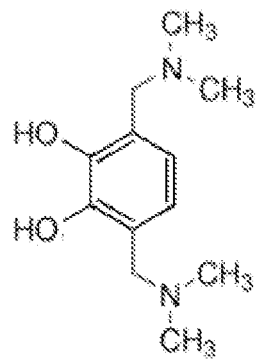

de préférence encore, le catalyseur (A2-1) est le composé 2,4,6-tri(diméthylaminométhyl)phénol répondant à la formule suivante :

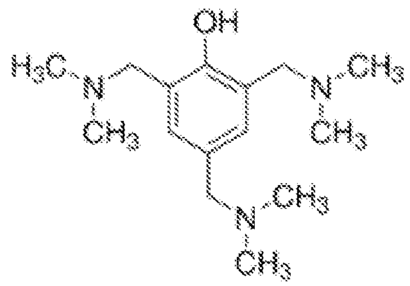

Selon un mode de réalisation de l'invention, le catalyseur (A2-2) différent du catalyseur (A2-1) est choisi parmi les composés aromatiques comprenant au moins une fonction hydroxyle ou au moins une fonction $-(CH_2)-N(CH_3)_2$.

De préférence, le catalyseur (A2-2) est choisi parmi les composés suivants :

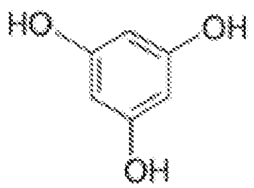

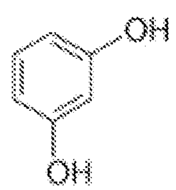

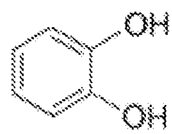

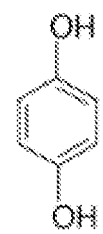

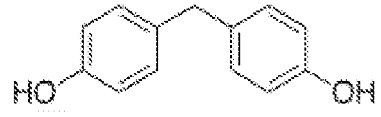

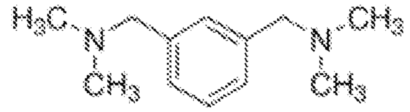

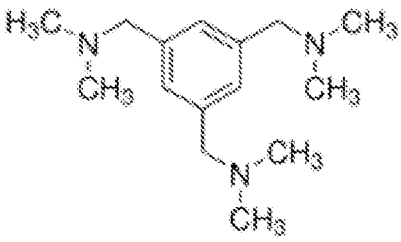

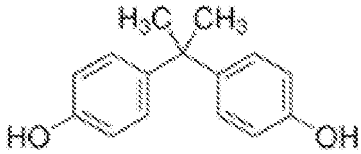

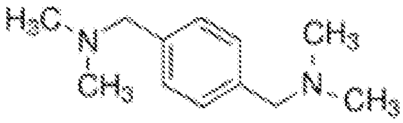

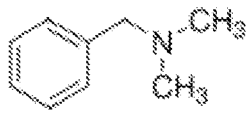

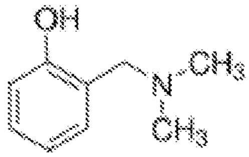

de préférence encore, le catalyseur (A2-2) est choisi parmi les composés suivants :

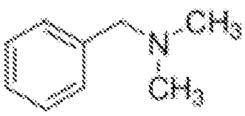

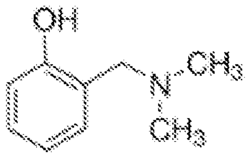

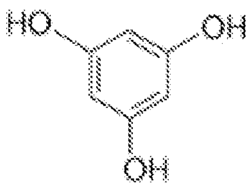

encore plus préférentiellement, le catalyseur (A2-2) est le composé diméthylbenzylamine répondant à la formule suivante :

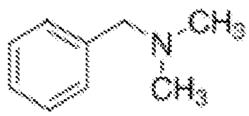

Selon un mode de réalisation particulier, le catalyseur (A2) comprend un mélange de 2,4,6-tri(diméthylaminométhyl)phénol à titre de catalyseur (A2-1) et de diméthylbenzylamine à titre de catalyseur (A2-2).

Selon un mode de réalisation de l'invention, les deux relations suivantes sont respectées dans la composition liquide :

$$(1)\ 50{,}00\ \text{méq/g} \leq \Phi(OH) + \Phi(CH_2\text{-}NR^7R^8) \leq 90{,}00\ \text{méq/g}$$

$$(2)\ 0{,}10 \leq \Phi(OH)/\Phi(CH_2\text{-}NR^7R^8) \leq 0{,}30$$

dans lesdites relations (1) et (2) :

- $\Phi$(OH) représente le nombre de fonctions -OH portées par un noyau aromatique exprimé en milliéquivalent par gramme de composition liquide ;
- $\Phi((CH_2)\text{-}N(R^7R^8)_2)$ représente le nombre de fonctions $-CH_2\text{-}NR^7R^8$ portées par un noyau aromatique exprimé en milliéquivalent par gramme de composition liquide.

Selon un mode de réalisation de l'invention, la résine époxy (B1) est dérivée du diglycidyl éther, de préférence

un dérivé du diglycidyl éther du bisphénol A.

Selon un mode de réalisation de l'invention, l'agent de couplage (A3) est un composé bi-fonctionnel comprenant au moins une première fonction capable de réagir avec le polymère silylé (A1) et une seconde fonction capable de réagir avec la résine époxy (B1).

Un second objet de la présente invention concerne un kit prêt à l'emploi comprenant la composition liquide selon l'invention, les compositions A et B étant conditionnées dans deux compartiments distincts.

La présente invention concerne également l'utilisation de la composition liquide selon l'invention ou du kit selon l'invention pour la formation d'une membrane d'étanchéité.

La présente invention concerne également une membrane d'étanchéité obtenue par réticulation de la composition liquide selon l'invention.

Un autre objet de la présente invention est un procédé d'étanchéification d'une surface, ledit procédé comprenant l'application puis la réticulation de la composition liquide selon l'invention sur ladite surface.

La présente invention concerne également une surface revêtue d'une membrane selon l'invention.

La présente invention permet de fournir une composition liquide pour membrane d'étanchéité, pour une utilisation en milieu extérieur.

La composition liquide selon l'invention peut être conditionnée sous une forme qui la rende directement prête à l'emploi par un utilisateur, et la membrane correspondante possède une très forte résistance au déchirement permettant la circulation piétonne et la circulation de véhicules légers.

La membrane d'étanchéité selon l'invention présente une élongation supérieure à 300% permettant de suivre les mouvements et les déformations du support sans rupture.

La membrane d'étanchéité selon l'invention rend parfaitement étanche à l'eau les supports sur lesquels elle est appliquée.

La résistance à la déchirure de la membrane d'étanchéité selon l'invention permet la circulation, c'est-à-dire que l'on peut marcher dessus sans la déchirer ou créer un trou laissant passer l'eau.

La composition liquide selon l'invention peut être appliquée et adhérer sur des bétons présentant une humidité supérieure à 5% sans décollement ou phénomènes de bulles. Cela permet de réduire le délai d'attente avant de réaliser la pose de la membrane d'étanchéité.

La composition liquide selon l'invention peut être appliquée et adhérer sur du béton sans primaire, l'étape de primarisation nécessitant un délai d'attente de plusieurs heures. L'absence de primaire est donc un gain de temps et d'argent.

La membrane d'étanchéité obtenue après réticulation de la composition liquide présente des propriétés mécaniques satisfaisantes, en particulier un allongement à la rupture satisfaisant. L'allongement à la rupture est une propriété importante car la membrane se doit d'accompagner les éventuelles déformations des supports et rester souple aux températures négatives. En cas de rigidité trop importante, la membrane pourrait fissurer ou présenter des craquelures laissant passer l'eau.

La membrane d'étanchéité selon l'invention ne jaunit pas, même sous l'effet de la chaleur ou des rayonnements UV.

La surface revêtue de la membrane selon l'invention est rendue étanche par l'application d'une seule couche de composition liquide. La membrane d'étanchéité selon l'invention est une membrane monocouche.

## EXPOSE DETAILLE DES MODES DE REALISATION DE L'INVENTION

La présente invention concerne une composition liquide bi-composante comprenant :

- une composition A comprenant :

  A1) de 20 à 80% en poids d'au moins un polymère silylé comprenant au moins un, de préférence au moins deux groupements de formule (I) :

$$-Si(R^4)_p(OR^5)_{3-p} \qquad (I)$$

  dans laquelle :

  - $R^4$ et $R^5$, identiques ou différents, représentent chacun un radical alkyl linéaire ou ramifié comprenant de 1 à 4 atomes de carbone, avec la possibilité que quand il y a plusieurs radicaux $R^4$ (ou $R^5$), ces derniers soient identiques ou différents ;
  - p est un nombre entier égal à 0, 1 ou 2 ;

A2) de 3 à 9% en poids d'un mélange d'au moins deux catalyseurs (A2-1) et (A2-2) de type aromatique, le catalyseur (A2-1) étant de type phénolique substitué par au moins une fonction $-(CH_2)-N(R^7R^8)$ où $R^7$ et $R^8$ représentent indépendamment l'un de l'autre un radical alkyle linéaire ou ramifié comprenant de 1 à 4 atomes de carbone ;
A3) de 0,1 à 2% en poids d'au moins un agent de couplage entre le polymère silylé présent dans la composition A et la résine époxy présente dans la composition B ;

- une composition B comprenant :

B1) de 10 à 40% en poids d'au moins une résine époxy ;
B2) de 0,2 à 3% en poids d'au moins un catalyseur pour la condensation de silanol ;
les pourcentages en poids étant exprimés par rapport au poids total de la composition liquide,
le mélange d'au moins deux catalyseurs (A2-1) et (A2-2) étant choisi de sorte que les deux relations suivantes sont respectées :

$$(1)\ 48{,}00\ \text{méq/g} \leq \Phi(OH) + \Phi(CH_2\text{-}NR^7R^8) \leq\ 90{,}00\ \text{méq/g}$$

$$(2)\ 0{,}10 \leq \Phi(OH)/\Phi(CH_2\text{-}NR^7R^8) \leq\ 0{,}33$$

dans lesdites relations (1) et (2) :

- $\Phi(OH)$ représente le nombre de fonctions -OH portées par un noyau aromatique exprimé en milliéquivalent par gramme de composition liquide ;
- $\Phi(CH_2\text{-}NR^7R^8)$ représente le nombre de fonctions $-CH_2\text{-}NR^7R^8$ portées par un noyau aromatique exprimé en milliéquivalent par gramme de composition liquide.

Selon un mode de réalisation de l'invention, la composition liquide selon l'invention est sous forme bi-composante (deux parties), dans laquelle la composition A se trouve dans un premier compartiment et la composition B se trouve dans un second compartiment. Avantageusement, la composition A et la composition B sont mélangées par un mélange extemporané avant application de la composition liquide sur le support ou la surface à rendre étanche (étanchéifier).

*Polymère silylé (A1)*

Au sens de la présente invention, on entend par polymère silylé, un polymère comportant au moins un groupement alkoxysilane. De préférence, le polymère silylé comportant au moins un groupement alkoxysilane est un polymère comprenant au moins un, de préférence au moins deux groupements de formule (I) :

$$-Si(R^4)_p(OR^5)_{3-p} \qquad (I)$$

dans laquelle :

- $R^4$ et $R^5$, identiques ou différents, représentent chacun un radical alkyl linéaire ou ramifié comprenant de 1 à 4 atomes de carbone, avec la possibilité que quand il y a plusieurs radicaux $R^4$ (ou $R^5$), ces derniers soient identiques ou différents ;
- p est un nombre entier égal à 0, 1 ou 2.

Le polymère silylé tel que défini ci-dessus comprend au moins un groupement alkoxysilyle réticulable. Le groupement alkoxysilyle réticulable est de préférence positionné en terminaison dudit polymère. Un positionnement en milieu de chaîne n'est toutefois pas exclu. Le polymère silylé n'est pas réticulé avant l'application de la composition liquide. La composition liquide est appliquée dans des conditions permettant sa réticulation.
Le polymère silylé se présente généralement sous forme de liquide plus ou moins visqueux. De préférence, le polymère silylé présente une viscosité inférieure à 20 Pa.s, ladite viscosité étant mesurée selon une méthode de type Brookfield à 23°C et 50% d'humidité relative.
Selon un mode de réalisation, le polymère silylé comprend au moins deux groupements de formule (I), de préférence au moins trois groupements de formule (I), de préférence encore au moins quatre groupements de formule (I).

De préférence, le ou les polymères silylés présentent une masse molaire moyenne allant de 500 à 50000 g/mol, de préférence encore allant de 700 à 20000 g/mol. La masse molaire des polymères peut être mesurée par des méthodes bien connues de l'homme du métier, par exemple par RMN et chromatographie d'exclusion stérique en utilisant des étalons de type polyéthylène glycol.

De préférence, les polymères silylés sont choisis parmi les polyuréthanes silylés, les polyéthers silylés, et leurs mélanges.

Selon un mode de réalisation, le polymère silylé répond à l'une des formules (II), (III) ou (IV) :

$$(R^5O)_{3-p}(R^4)_pSi - R^3 - NH - \underset{\underset{O}{\|}}{C} - [OR^2]_n \left[ O - \underset{\underset{O}{\|}}{C} - NH - R^1 - NH - \underset{\underset{O}{\|}}{C} - [OR^2]_n \right]_{m_1} O - \underset{\underset{O}{\|}}{C} - NH - R^3 - Si(R^4)p(OR^5)_{3-p}$$

(II)

$$(R^5O)_{3-p}(R^4)_pSi - R^3 - [OR^2]_n - O - R^3 - Si(R^4)_p(OR^5)_{3-p}$$

(III)

$$(R^5O)_{3-p}(R^4)_pSi - R^3 - \underset{\underset{R^6}{|}}{N} - \underset{\underset{O}{\|}}{C} - NH - R^1 \left[ NH - \underset{\underset{O}{\|}}{C} - [OR^2]_n - O - \underset{\underset{O}{\|}}{C} - NH - R^1 \right]_m NH - \underset{\underset{O}{\|}}{C} - \underset{\underset{R^6}{|}}{N} - R^3 - Si(R^4)p(OR^5)_{3-p}$$

(IV)

Dans les formules (II), (III) et (IV) :

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone,
- $R^6$ représente un atome d'hydrogène, un radical phényle ou un radical alkyle linéaire, ramifié ou cyclique comprenant de 1 à 6 atomes de carbone,
- n est un nombre entier tel que la masse molaire moyenne du bloc polyéther de formule $-[OR^2]_n-$ va de 200 g/mole à 40000 g/mole,
- $m_1$ est zéro ou un nombre entier tel que la masse molaire moyenne du polymère va de 500 g/mole à 50000 g/mole,
- m est un nombre entier différent de zéro tel que la masse molaire moyenne du polymère va de 500 g/mole à 50000 g/mole,
- p est un nombre entier égal à 0, 1 ou 2.

De préférence, $R^1$ est choisi parmi l'un des radicaux divalents suivants dont les formules ci-dessous font apparaître les 2 valences libres :

a) le radical divalent dérivé de l'isophorone :

b)

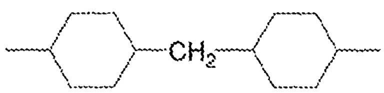

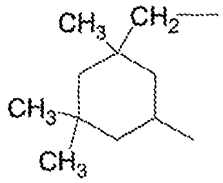

c)

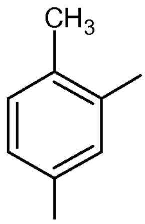

ou

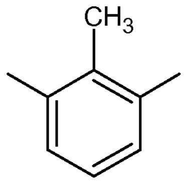

d)

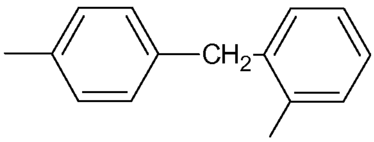

ou

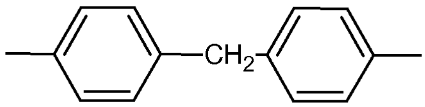

e) $-(CH_2)_6-$ (ou radical hexaméthylène)

f)

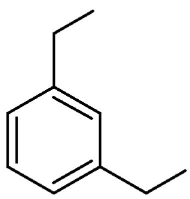

Les polymères de formule (II) peuvent être obtenus selon un procédé décrit dans les documents EP 2336208 et WO 2009/106699. Parmi les polymères répondant à la formule (II), on peut citer :

- GENIOSIL® STP-E10 (disponible auprès de Wacker) : polyéther comprenant deux groupements (I) de type diméthoxy ($m_1$ égal à 0, p égal à 1 et $R^4$ et $R^5$ représentent un groupement méthyle) présentant une masse molaire moyenne en nombre de 8889 g/mol où $R^3$ représente un groupement méthyle;
- GENIOSIL® STP-E30 (disponible auprès de Wacker) : polyéther comprenant deux groupements (I) de type diméthoxy ($m_1$ égal à 0, p égal à 1 et $R^4$ et $R^5$ représentent un groupement méthyle) présentant une masse molaire moyenne en nombre de 14493 g/mol où $R^3$ représente un groupement méthyle;
- SPUR+® 1050MM (disponible auprès de Momentive) : polyuréthane comprenant deux groupements (I) de type triméthoxy ($m_1$ différent de 0, p égal à 0 et $R^5$ représente un groupement méthyle) présentant une masse molaire moyenne en nombre de 16393 g/mol où $R^3$ représente un groupement n-propyle ;
- SPUR+® Y-19116 (disponible auprès de Momentive): polyuréthane comprenant deux groupements (I) de type triméthoxy ($m_1$ différent de 0 et $R^5$ représente un groupement méthyle) présentant une masse molaire moyenne en nombre allant de 15000 à 17000 g/mol g/mol où $R^3$ représente un groupement n-propyle ;
- DESMOSEAL® S XP 2636 (disponible auprès de Bayer) : polyuréthane comprenant deux groupements (I) de type triméthoxy (m1 différent de 0, p égal à 0 et $R^5$ représente un groupement méthyle) présentant une masse molaire moyenne en nombre de 15038 g/mol où $R^3$ représente un groupement n-propyle.

Les polymères de formule (III) peuvent être obtenus par hydrosilylation de polyéther diallyléther selon un

procédé décrit par exemple dans le document EP 1829928. Parmi les polymères répondant à la formule (III), on peut citer le polymère MS SAX® 350 (disponible auprès de Kaneka) correspondant à un polyéther comprenant deux groupements (I) de type diméthoxy (p égal à 1 et $R^4$ représente un groupement méthyle) ayant une masse molaire moyenne en nombre allant de 14000 à 16000 Dalton.

Selon un mode de réalisation préféré de l'invention, la composition du revêtement d'étanchéité liquide comprend au moins un polymère silylé de formule (III).

Selon un mode de réalisation particulier, la composition liquide selon l'invention ne comprend pas de polymère de type acrylate ou méthacrylate ou de type acrylique ou méthacrylique.

Selon un mode de réalisation particulier, le polymère silylé (A1) selon l'invention est différent d'un polymère silicone de type polysiloxane.

Selon un mode de réalisation de l'invention, tous les polymères silylés de la composition liquide sont choisis parmi les polymères de formule (II), (III) ou (IV) tels que définis ci-dessus.

Le ou les polymères silylés sont présents à hauteur de 20 à 80 % en poids, de préférence de 40 à 65% en poids, du poids total de la composition liquide.

*Catalyseurs de type aromatique (A2)*

Les catalyseurs de type aromatique (A2) permettent l'homopolymérisation de la résine époxy.

La composition A comprend un mélange d'au moins deux catalyseurs différents (A2-1) et (A2-2) de type aromatique, dont au moins un des deux catalyseurs est de type phénolique substitué par au moins une fonction $-(CH_2)-N(R^7R^8)$ (catalyseur nommé A2-1). De préférence, au moins une fonction OH et au moins une fonction $-(CH_2)-N(R^7R^8)$ du catalyseur (A2-1) sont en position ortho l'un par rapport à l'autre sur le cycle aromatique.

Selon un mode de réalisation de l'invention, le catalyseur (A2-1) comprend au moins un noyau phénolique substitué par au moins deux fonctions $-(CH_2)-N(R^7R^8)$ et de préférence en position ortho du radical OH.

$R^7$ et $R^8$ représentent indépendamment l'un de l'autre un radical alkyle linéaire ou ramifié comprenant de 1 à 4 atomes de carbone, de préférence de 1 à 3 atomes de carbone, de préférence encore de 1 à 2 atomes de carbone.

Selon un mode de réalisation, $R^7$ et $R^8$ sont identiques.

Selon un mode de réalisation, $R^7$ et $R^8$ sont identiques et représentent un groupement méthyle.

Le second catalyseur de type aromatique (A2-2) est différent du premier catalyseur (A2-1) et peut être choisi parmi les composés aromatiques comprenant au moins une fonction hydroxyle ou au moins une fonction $-(CH_2)-N(R^7R^8)$, $R^7$ et $R^8$ ont la même signification que pour le catalyseur (A2-1).

Le mélange d'au moins deux catalyseurs (A2-1) et (A2-2) est choisi de sorte que les deux relations suivantes sont respectées :

$$(1)\ 48{,}00\ \text{méq/g} \leq \Phi(OH) + \Phi(CH_2\text{-}NR^7R^8) \leq 90{,}00\ \text{méq/g}$$

$$(2)\ 0{,}10 \leq \Phi(OH)/\Phi(CH_2\text{-}NR^7R^8) \leq 0{,}33$$

dans ces deux relations :

- $\Phi(OH)$ représente le nombre de fonctions -OH portées par un noyau aromatique exprimé en milliéquivalent par gramme de composition liquide ;
- $\Phi(CH_2\text{-}NR^7R^8)$ représente le nombre de fonctions $-CH_2\text{-}NR^7R^8$ portées par un noyau aromatique exprimé en milliéquivalent par gramme de composition liquide.

$\Phi(OH)$ et $\Phi(CH_2\text{-}NR^7R^8)$ peuvent être déterminés d'après la masse molaire des constituants portant une ou plusieurs fonctions -OH et/ou $-CH_2\text{-}NR^7R^8$ portées par un noyaux aromatique et les pourcentages pondéraux de ces constituants dans la composition liquide.

De préférence, le mélange d'au moins deux catalyseurs (A2-1) et (A2-2) est choisi de sorte que les deux relations suivantes sont respectées :

$$(1)\ 50{,}00\ \text{méq/g} \leq \Phi(OH) + \Phi(CH_2\text{-}NR^7R^8) \leq 90{,}00\ \text{méq/g}$$

$$(2)\ 0{,}10 \leq \Phi(OH)/\Phi(CH_2\text{-}NR^7R^8) \leq 0{,}30.$$

De préférence encore, le mélange d'au moins deux catalyseurs (A2-1) et (A2-2) est choisi de sorte que les deux relations suivantes sont respectées :

$$(1)\ 50{,}00\ \text{méq/g} \leq \Phi(OH) + \Phi(CH_2\text{-}NR^7R^8) \leq 90{,}00\ \text{méq/g}$$

$$(2)\ 0{,}15 \leq \Phi(OH)/\Phi(CH_2\text{-}NR^7R^8) \leq 0{,}30.$$

Encore plus préférentiellement, le mélange d'au moins deux catalyseurs (A2-1) et (A2-2) est choisi de sorte que les deux relations suivantes sont respectées :

$$(1)\ 65{,}00\ \text{méq/g} \leq \Phi(OH) + \Phi(CH_2\text{-}NR^7R^8) \leq 90{,}00\ \text{méq/g}$$

$$(2)\ 0{,}15 \leq \Phi(OH)/\Phi(CH_2\text{-}NR^7R^8) \leq 0{,}25.$$

Selon un mode de réalisation de l'invention, le mélange d'au moins deux catalyseur (A2) représente de 3 à 8% en poids, de préférence de 4 à 8% en poids, de préférence encore de 5 à 7% en poids, par rapport au poids total de la composition liquide.

Selon un mode de réalisation de l'invention, le mélange d'au moins deux catalyseurs (A2-1) et (A2-2) est constitué de deux catalyseurs (A2-1) et (A2-2).

Selon un mode de réalisation de l'invention, le catalyseur (A2-1) est choisi de manière non limitative parmi les composés suivants :

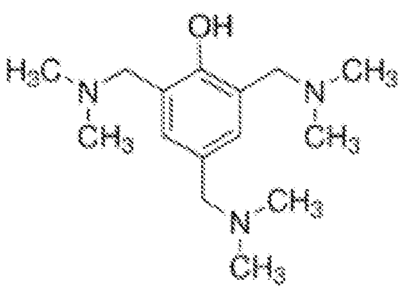

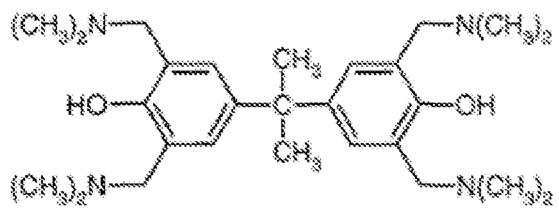

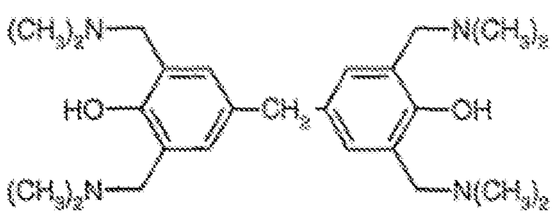

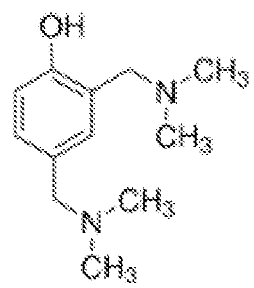

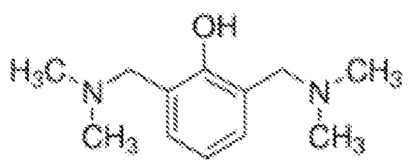

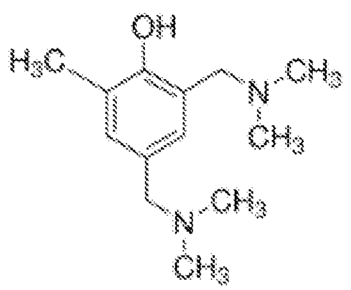

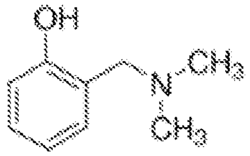

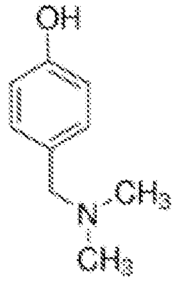

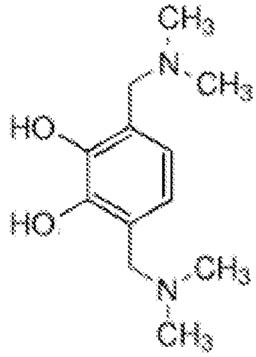

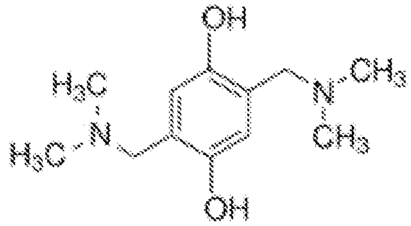

De préférence, le premier catalyseur (A2-1) est le composé 2,4,6-tri(diméthylaminométhyl)phénol répondant à la formule suivante :

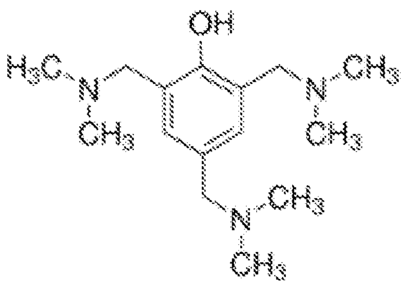

ledit composé 2,4,6-tri(diméthylaminométhyl)phénol étant disponible commercialement sous la dénomination ANCAMINE® K54 par la Société Air Products.

De préférence, la composition liquide comprend moins de 6% en poids de 2,4,6-tri(diméthylaminométhyl)phénol, exprimé par rapport au poids total de la composition liquide.

Lorsque la composition comprend des quantités élevées de 2,4,6-tri(diméthylaminométhyl)phénol, par exemple 6% en poids, alors la composition liquide a tendance à jaunir au cours du temps, ce qui n'est pas satisfaisant pour l'utilisateur d'un point de vue esthétique.

De préférence encore, la composition liquide comprend de 2 à 5% en poids, plus préférentiellement de 2,5 à 4% en poids, avantageusement de 2,7 à 3,7% en poids, de 2,4,6-tri(diméthylaminométhyl)phénol, par rapport au poids total de la composition liquide.

Selon un mode de réalisation de l'invention, le second catalyseur (A2-2) peut être choisi parmi l'un des composés listés ci-dessus, étant entendu que le catalyseur (A2-1) est différent du catalyseur (A2-2).

En outre, le second catalyseur (A2-2), du mélange d'au moins deux catalyseurs, peut être choisi parmi les composés suivants :

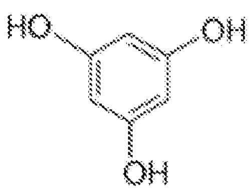

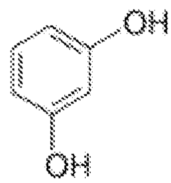

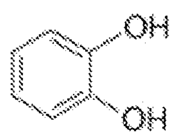

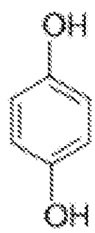

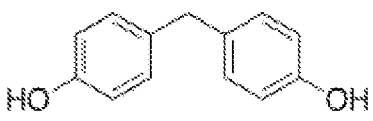

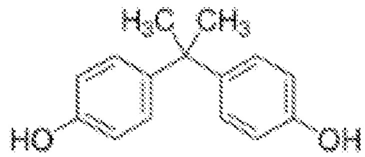

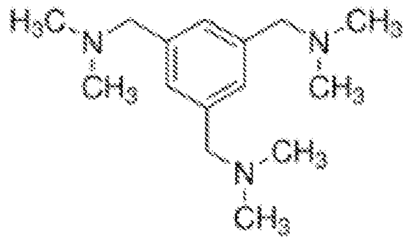

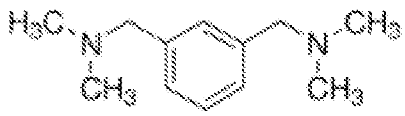

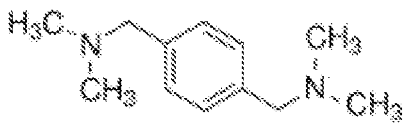

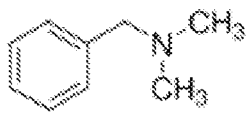

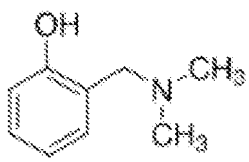

Selon un mode de réalisation, le catalyseur (A2-2) est choisi parmi les composés :

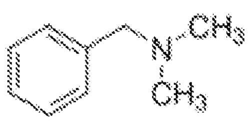

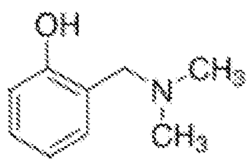

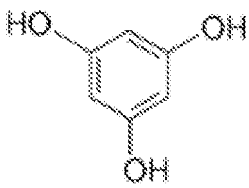

De préférence, le catalyseur (A2-2) est le composé diméthylbenzylamine (BDMA) répondant à la formule suivante :

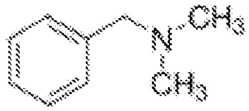

ledit composé diméthylbenzylamine étant disponible commercialement par la Société Air Products.

Selon un mode de réalisation de l'invention, le catalyseur (A2) est un mélange comprenant du 2,4,6-tri(diméthylaminométhyl)phénol à titre de catalyseur (A2-1) et du diméthylbenzylamine à titre de catalyseur (A2-2). Selon ce mode de réalisation, le mélange comprend de préférence :

- de 2 à 5% en poids, de préférence de 2,5 à 4% en poids, de préférence encore de 3,0 à 3,5% en poids, de 2,4,6-tri(diméthylaminométhyl)phénol,
- de 2 à 5,5% en poids, de préférence de 2,5 à 4% en poids, de préférence encore de 3,0 à 3,5% en poids, de diméthylbenzylamine,

par rapport au poids total de la composition liquide.

*Agent de couplage ou promoteur d'adhésion (A3)*

La composition liquide selon l'invention comprend au moins agent de couplage (A3), aussi appelé promoteur d'adhésion, qui permet de jouer le rôle de promoteur d'adhésion et de point d'ancrage entre la résine époxy et le polymère silylé.

Selon un mode de réalisation, l'agent de couplage (A3) est un composé bi-fonctionnel comprenant au moins une première fonction capable de réagir avec le polymère silylé (A1) et au moins une seconde fonction capable de réagir avec la résine époxy (B1).

Selon un mode de réalisation, la première fonction capable de réagir avec le polymère silylé est une fonction silane, de préférence une fonction alkoxysilane où les groupements alkoxy ont de préférence de 1 à 3 atomes de carbone, de préférence encore une fonction trialkoxysilane où les groupements alkoxy ont de préférence 1 atome de carbone.

Selon un mode de réalisation, la seconde fonction capable de réagir avec la résine époxy est choisie parmi les fonctions amine, de préférence amine primaire, les fonctions mercapto (fonctions -SH) ou les fonctions époxy.

De préférence, le promoteur d'adhésion ou agent de couplage (A3) est choisi parmi les aminosilanes, les mercaptosilanes ou les époxysilanes, de préférence parmi les aminosilanes.

Au sens de la présente invention, on entend par « aminosilane », « mercaptosilane » ou « époxysilane », un composé comprenant au moins une fonction amine, respectivement mercapto ou époxy, et au moins une fonction silane.

Selon un mode de réalisation de l'invention, la fonction amine ou mercapto ou époxy et la fonction silane de l'aminosilane ou mercaptosilane ou époxysilane sont séparées par un groupement alkyle linéaire, ramifié ou cyclique comprenant de 1 à 16 atomes de carbone, de préférence de 1 à 12 atomes de carbone, de préférence encore de 2 à 8 atomes de carbone, avantageusement de 3 à 6 atomes de carbone.

Selon un mode de réalisation de l'invention, l'aminosilane ou le mercaptosilane ou l'époxysilane est choisi parmi les composés comprenant une fonction amine primaire ou mercapto ou époxy et une fonction alkoxysilane, ladite fonction alkoxysilane étant par exemple une fonction trialkoxysilane. Selon ce mode de réalisation, la fonction alkoxysilane comprend de préférence de 1 à 4 atomes de carbone, de préférence encore de 1 à 3 atomes de carbone, avantageusement de 1 à 2 atomes de carbone.

On citera à titre d'exemples de promoteur d'adhésion ou agent de couplage (A3) le N-(2-aminoéthyl)-3-aminopropyltriméthoxysilane (GENIOSIL® GF 91), le 3-aminopropyltriméthoxysilane (SILQUEST® A-1100) tous deux disponibles auprès de la Société WACKER, le N-(beta-aminoéthyl)-gamma-aminopropyltriméthoxysilane (SILQUEST® A1120) disponible auprès de la Société Momentive, le (3-Mercaptopropyl)triméthoxysilane (Dynasylan® MTMO) disponible auprès de la Société EVONIK et 3-Glycidoxypropyltrimethoxysilane (GENIOSIL® GF 80) disponible auprès de la Société WACKER.

La composition liquide selon l'invention peut, selon un mode de réalisation, comprendre un mélange d'au moins deux agents de couplage (A3) différents, dont de préférence au moins un aminosilane.

Le ou les promoteur(s) d'adhésion ou agent(s) de couplage est/sont ainsi ajouté(s) dans la composition A.

Le promoteur d'adhésion ou agent de couplage représente de 0,1 à 2% en poids, de préférence de 0,5 à 1,5% en poids, de préférence encore de 0,4 à 1,25% en poids, du poids total de la composition liquide.

*Résine époxy (B1)*

Au sens de la présente invention, la résine époxy est un composé comprenant au moins deux fonctions époxy, lesdites fonctions époxy étant de préférence en position terminale.

Selon un mode de réalisation, la résine époxy (B1) est un dérivé du diglycidyl éther.

Les dérivés diglycidyl éther qui peuvent être mis en œuvre dans la composition liquide selon l'invention sont des diglycidyléthers susceptibles d'être obtenus par réaction de haloépoxydes tels que l'épichlorhydrine (également dénommée 2-(chloromethyl)oxirane) ou la 13-méthyl-épichlorhydrine avec le bisphénol A, le bisphénol AD ou le bisphénol F.

Le bisphénol A (ou 2,2-bis(4-hydroxyphényl)propane) a pour formule :

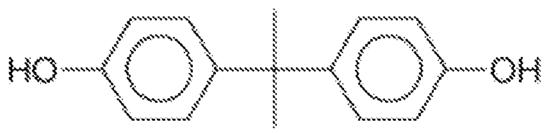

Le bisphénol AD (ou 1,1 -bis(4-hydroxyphényl)-éthane) a pour formule :

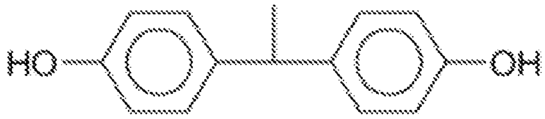

Le bisphénol F (bis(4 -hydroxyphényl)méthane) a pour formule :

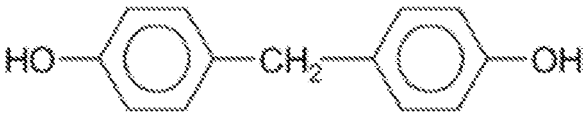

Selon un mode de réalisation de l'invention, la résine époxy (B1) est un dérivé du diglycidyléther du bisphénol A (également connu sous le sigle DGEBA), de formule ci-dessous est préféré :

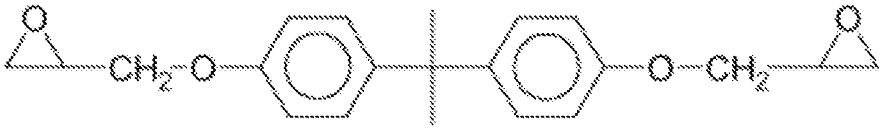

Ce composé est disponible sous la référence commerciale D.E.R. 331 auprès de la société Dow.

Les résines époxy (B1) sont présentes à hauteur de 10 à 40% en poids, de préférence de 20 à 33% en poids, du poids total de la composition liquide.

*Catalyseur du polymère silylé (B2)*

Les catalyseurs B2 utilisés dans la composition liquide selon l'invention peut être tout catalyseur connu par l'homme du métier pour la condensation de silanol en présence d'humidité tel que les amines ou les dérivés organométalliques de fer, de titane, d'aluminium qui sont pour la plupart disponibles dans le commerce. A titre d'exemples, on peut citer :

- Les dérivés organiques du titane comme l'acétyl acétonate de titane (TYZOR® AA75) disponibles commercialement sous la auprès de la Société DuPont),
- Les chélates d'aluminum comme le K-KAT® 5218 disponible auprès de la société King Industries,
- Le 1,8-diazabicyclo[5.4.0]undéc-7-ène (DBU) ou le 1,5-diazabicyclo[4.3.0]non-5-ène (DBN),
- Les dérivés organiques de l'étain (NEOSTANN® S-1 ou TIB-KAT® 324) disponibles respectivement auprès de NITTO KASEI et de TIB Chemicals. Ces catalyseurs à base d'étain conviennent particulièrement pour les polymères silylés de formule (III).

Le ou les catalyseurs (B2) sont présents à hauteur de 0,2 à 3% en poids, de préférence de 0,8 à 2,5% en poids, de préférence encore de 0,4 à 1,25% en poids, du poids total de la composition liquide.

Il existe des catalyseurs pour la condensation des silanols de type aminosilane. Dans ce cas, la quantité de catalyseur (B2) de type aminosilane dans la composition liquide est à rajouter en plus de la quantité d'agent de couplage ou promoteur d'adhésion de type aminosilane.

*Autres additifs*

La composition liquide selon l'invention peut en outre comprendre des charges minérales ou organiques. Ces charges sont de préférence introduites dans la composition B, la partie comprenant l'époxy.

Les charges ont pour fonction de renforcer la membrane après durcissement. La charge est préférentiellement de type minéral, par exemple choisie parmi le sable, les billes de verre, le verre, le quartz, la barite, l'alumine, le mica, le talc. La charge est préférentiellement choisie parmi le talc et les billes de verre.

Selon un autre mode de réalisation, la composition comprend au moins trois charges différentes choisies parmi le sable, les billes de verre, le verre, le quartz, la barite, l'alumine, le mica, le talc.

Il a été observé que l'utilisation de billes de verres permet plus particulièrement de conserver une bonne résistance au déchirement.

Les billes de verre utilisées dans la présente invention ont de préférence une granulométrie allant de 1 à 400

μm, de préférence allant de 10 à 350 μm et de préférence allant de 50 à 300 μm. A titre d'exemple, on citera les billes de verres disponibles auprès de la société POTTERS sous la référence commerciale SPHERIGLASS® 2024 CP00 présentant une distribution de taille de particules allant de 106 à 212 μm et une densité apparente (mesurée selon ASTM D-3101-78) non tassée d'environ 1,17 kg/$m^3$ et tassée d'environ 1,26 kg/$m^3$.

Si le talc est utilisé, sa granulométrie est de préférence comprise entre 2 et 25 μm, de préférence entre 5 et 15 μm. A titre d'exemple, on citera le LUZENAC® 20M2 disponible auprès de la société IMERYS Talc.

Lorsque des charges sont présentes, elles peuvent représenter jusqu'à 50% en poids, de préférence de 20 à 40% en poids, du poids total de la composition liquide.

La composition liquide selon l'invention peut comprendre en outre au moins un additif supplémentaire choisi parmi les plastifiants, les solvants, en particulier les solvants volatils, les pigments organiques ou inorganiques, les absorbeurs d'humidité (en anglais « moisture-scavenger »), les stabilisants UV, les stabilisants thermiques, les agents antimousses (en anglais « defoamers »). Ce ou ces autres additifs supplémentaires sont de préférence ajoutés dans la composition B, à l'exception du ou des absorbeurs d'humidités qui sont ajoutés dans la composition A.

Comme antimousse on peut citer le BYK® 515 A disponible auprès de la société BYK, les antimousses DISPARLON OX® 880 EF et DISPARLON® 1958 tous deux disponibles auprès de la société KUSOMOTO Chemicals.

Le plastifiant peut par exemple être choisi parmi les esters de l'acide benzoïque, l'acide phtalique, l'acide trimellitique, l'acide pyromellitique, l'acide adipique, l'acide sébacique, l'acide fumarique, l'acide maléique, l'acide itaconique ou l'acide citrique ou parmi les dérivés de polyester, de polyéther, de l'huile minérale d'hydrocarbures. Parmi les dérivés de l'acide phtalique, on peut citer les phtalates, tels que le phtalate de dibutyle, le phtalate de dioctyle, le phtalate de dicyclohexyle, le phtalate de diisooctyle, le phtalate de diisodécyle, le phtalate de dibenzyle ou le phtalate de butylbenzyle. Si le plastifiant est présent, il est choisi de préférence parmi les phtalates, les sébaçates, les adipates et les benzoates.

Le plastifiant doit être compatible avec le polymère et ne pas démixer dans la composition liquide. Le plastifiant permet d'augmenter la plasticité (élongation) de la composition et de diminuer sa viscosité.

Lorsqu'un plastifiant est présent dans la composition, sa teneur est de préférence inférieure ou égale à 5% en poids, de préférence inférieure ou égale à 3% en poids, exprimée par rapport au poids total de la composition liquide. Lorsqu'il est présent, le plastifiant représente de 0,1 à 5% en poids ou de préférence 0,5 à 3% en poids du poids total de la composition liquide.

Le solvant est de préférence un solvant volatil à température ambiante (environ 23°C). Le solvant volatil peut par exemple être choisi parmi les alcools volatils à température ambiante, tel que l'éthanol ou l'isopropanol. Le solvant volatil permet de diminuer la viscosité de la composition et de rendre la composition liquide plus facile à appliquer. Le caractère volatil du solvant permet à la membrane, obtenu après réticulation de la composition, de ne plus contenir de solvant et nuire aux propriétés mécaniques de la membrane.

Lorsqu'un solvant, en particulier un solvant volatil, est présent dans la composition, sa teneur est de préférence inférieure ou égale à 3% en poids, de préférence inférieure ou égale à 2% en poids, exprimée par rapport au poids total de la composition liquide. Lorsqu'il est présent, le solvant, en particulier le solvant volatil, est présent à hauteur de 0,5 à 3% en poids et de préférence 1 à 2% en poids du poids total de la composition liquide.

Lorsqu'un pigment est présent dans la composition, sa teneur est inférieure ou égale à 3% en poids, de préférence inférieure ou égale à 2% en poids, exprimée par rapport au poids total de la composition liquide. Lorsqu'il est présent, le pigment est présent à hauteur de 0,1 à 3% en poids et de préférence de 0,5 à 2% en poids du poids total de la composition liquide. Les pigments peuvent être des pigments organiques ou inorganiques.

L'absorbeur d'humidité, s'il est présent, peut être choisi parmi le vinyltriméthoxysilane (VTMO) tel que le SILQUEST® A171 disponible auprès de la Société MOMENTIVE, le vinyltriéthoxysilane (VTEO) tel que le GENIOSIL® GF 56 disponible auprès de la Société WACKER ou les alkoxyarylsilanes tel que le GENIOSIL® XL 70 disponible auprès de la Société WACKER.

Il peut être ajouté dans la composition A afin d'empêcher le polymère silylé de réagir.

Lorsqu'un absorbeur d'humidité est présent dans la composition, sa teneur est de préférence inférieure ou égale à 3% en poids, de préférence encore inférieure ou égale à 2% en poids, exprimée par rapport au poids total de la composition liquide. Lorsqu'il est présent, l'absorbeur d'humidité est présent à hauteur de 0,5 à 3% en poids et de préférence de 1 à 2% en poids du poids total de la composition liquide.

Des stabilisants U.V et thermiques peuvent être ajoutés afin de prévenir (ralentir ou empêcher) une dégradation du polymère pour une meilleure tenue aux U.V ou aux chocs thermiques. On citera à titre d'exemples, le TINUVIN® 123, le TINUVIN® 326 ou l'IRGANOX® 245 disponibles auprès de la société BASF.

De l'eau peut éventuellement être ajoutée en tant que composant, en raison du caractère réticulable à l'humidité de la composition liquide selon la présente invention. De préférence, l'eau est alors ajoutée dans la composition B. Les polymères silylés réticulant à humidité de l'air, un ajout d'eau peut permettre d'accélérer la montée en cohésion de la membrane, ce qui est particulièrement utile en cas de fortes épaisseurs (supérieures à 0,5 mm) afin d'accélérer la réaction de réticulation du polymère silylé. Il est possible d'utiliser l'eau du robinet ou de l'eau industrielle ou de l'eau

distillée, etc. En ce qui concerne la quantité d'eau ajoutée, la teneur varie de 0,1 à 1% du poids du polymère silylé. Une quantité inférieure à 0,1% ne permettrait pas d'accélérer suffisamment la réaction et une quantité supérieure à 1% pourrait entrainer des pertes d'adhérences.

*Composition liquide*

Selon un mode de réalisation particulier de l'invention, la composition liquide comprend :

- une composition A comprenant :

  o de 20 à 80% en poids, de préférence de 40 à 65% en poids, d'au moins un polymère silylé (A1),
  o de 3 à 9% en poids, de préférence de 4 à 8% en poids, d'un mélange d'au moins deux catalyseurs aminés pour dérivé diglycidyl éther (A2),
  o de 0,1 à 2% en poids, de préférence de 0,5 à 1,5% en poids, d'au moins un promoteur d'adhésion ou agent de couplage (A3) de type aminosilane,

- une composition B comprenant :

  ◦ de 10 à 40% en poids, de préférence de 20 à 33% en poids, de dérivé diglycidyl éther (B1), et
  ◦ de 0,2 à 3% en poids, de préférence de 0,8 à 2,5% en poids d'un catalyseur pour polymère silylé (B2),

les pourcentages étant exprimés par rapport au poids total de la composition liquide.

La composition liquide n'est pas réticulée avant son application sur le support. La composition liquide est appliquée dans des conditions permettant sa réticulation. La réticulation de la composition liquide se traduit par la formation d'un réseau polymérique tri-dimensionnel entre les chaines polymériques du polymère silylé et la résine époxy.

Kit prêt à l'emploi

L'invention concerne également un kit prêt à l'emploi comprenant la composition liquide selon l'invention, les compositions A et B étant conditionnées dans deux compartiments distincts.

Procédé de préparation de la composition liquide selon l'invention

La présente invention concerne également un procédé de préparation de la composition liquide selon l'invention.
Le procédé de préparation de la composition A comprend le mélange des constituants de la composition A à l'abri de l'humidité, de préférence dans des conditions anhydres et sous atmosphère inerte, par exemple sous atmosphère d'azote, de préférence à pression atmosphérique. Une mise sous vide peut être effectuée pour enlever les bulles du mélange. La composition A de la composition liquide est de préférence conditionnée à l'abri de l'air, en particulier à l'abri de l'humidité de l'air dans un emballage hermétique. La partie silylée (composition A) est par exemple stockée sous atmosphère inerte (atmosphère d'azote) et/ou dans des poches sous vide notamment des poches en aluminium qui sont particulièrement bien adaptées.
Le procédé de préparation de la composition B comprend le mélange des constituants de la composition B. Ce mélange peut se faire à température ambiante (23°C) et à pression atmosphérique. Une mise sous vide peut être effectuée pour enlever les bulles du mélange. La partie résine époxy (composition B) ne nécessitant pas d'atmosphère inerte ou de mise sous vide, celle-ci est conditionnée dans un seau métallique.
La mise en œuvre de la composition liquide comprend le mélange de la composition A avec la composition B. Les deux compositions A et B de la composition liquide sont destinées à être mélangées par un mélange extemporané, lors de l'utilisation de ladite composition liquide pour réaliser la membrane d'étanchéité.
Lors de l'application de composition liquide, l'utilisateur mélange les 2 compositions A et B préférentiellement dans un rapport 1 pour 1 en poids à l'aide par exemple d'un mélangeur à rotation équipée d'un fouet.

Réalisation de l'étanchéité

La présente invention concerne l'utilisation de la composition liquide selon l'invention ou du kit selon l'invention pour la formation d'une membrane d'étanchéité.
La présente invention concerne également une membrane d'étanchéité obtenue par réticulation de la composition liquide selon l'invention. En effet, la composition liquide, après mélange des deux compositions A et B va réticuler

et former une membrane étanche, l'humidité atmosphérique peut permettre d'accélérer la réticulation de la composition liquide.

La membrane selon l'invention peut avoir par exemple une épaisseur supérieure ou égale à 1,5 mm, de préférence allant de 1,5 mm à 3 mm.

La présente invention concerne également un procédé d'étanchéification d'une surface, ledit procédé comprenant l'application et la réticulation de la composition liquide selon l'invention sur ladite surface.

L'application de la composition liquide peut se faire en présence de l'humidité atmosphérique qui favorise la réticulation.

Selon un mode de réalisation, la composition liquide est chauffée à une température allant de 25°C à 40°C, ce qui accélère la vitesse de réticulation.

La surface peut être choisie parmi du béton, des anciens revêtements d'étanchéités du type polyuréthanne aliphatique, polyuréthanne en phase aqueuse, d'anciennes membranes bitumineuses, des revêtements en bac acier ou en aluminium.

De préférence, aucune couche primaire n'est présente entre la membrane selon l'invention et la surface à étanchéifier.

La surface peut être humide et comprendre par exemple jusqu'à 5% d'humidité.

La composition liquide selon l'invention peut être appliquée par tout procédé connu de l'homme du métier, par exemple à l'aide d'une spatule crantée, d'une raclette, d'une brosse, d'un pinceau, d'un pistolet pour spray ou bien à l'aide d'un rouleau pour peinture.

De préférence, le procédé d'étanchéification comprend une seule étape d'application de la composition liquide. Ainsi, la membrane d'étanchéité selon l'invention est de préférence une membrane « monocouche ».

La présente invention concerne également une surface revêtue d'une membrane selon l'invention.

De préférence, la surface est choisie parmi du béton, des anciens revêtements d'étanchéités du type polyuréthanne aliphatique, polyuréthanne en phase aqueuse, d'anciennes membranes bitumineuses, des revêtements en bac acier ou en aluminium.

De préférence, la membrane selon l'invention présente une épaisseur supérieure ou égale à 1,5 mm, de préférence allant de 1,5 mm à 3 mm.

De préférence, aucune couche primaire n'est présente entre la membrane selon l'invention et la surface.

De préférence, la surface revêtue selon l'invention comprend une seule membrane d'étanchéité, obtenue après une seule application de composition liquide selon l'invention.

## EXEMPLES

### Exemple 1 : Comparaison des différentes technologies existantes avec celle de l'invention

Le tableau 1 ci-dessous compare différentes technologies existantes (époxy, polymère silylé, polyuréthane, acrylique) avec la composition selon l'invention (bi-composant époxy-polymère silylé) pour la préparation de composition liquide pour membrane d'étanchéité vis-à-vis de plusieurs caractéristiques :

- stabilité à la couleur, évaluée visuellement : un « non » signifie que la couleur de la membrane étanche n'est pas stable (jaunissement au cours du temps), un « oui » signifie que la couleur de la membrane étanche est stable (pas de jaunissement au cours du temps);
- résistance au déchirement, mesurée selon la norme ISO 34-1 (méthode A, « éprouvette pantalon ») : un « oui » signifie que la résistance au cisaillement de la membrane (« Tear Strength » en anglais) est supérieure ou égale à 8 N/mm, un « non » signifie que la résistance au cisaillement de la membrane est inférieure à 8 N/mm ;
- adhésion sur béton humide, évaluée par mesure de l'adhérence grâce à un dynamomètre SATTEC: un « oui » signifie que l'adhésion sur béton humide est supérieure ou égale à 0.05 $N/mm^2$ et un « non » signifie que l'adhésion sur béton humide est inférieure à 0.05 $N/mm^2$ ;
- adhésion sur béton sans primaire, évaluée par mesure de l'adhérence grâce à un dynamomètre SATTEC : un « oui » signifie que la membrane adhère sur béton sans nécessité d'un primaire (couche intermédiaire entre le béton et la membrane) et un « non » signifie que la membrane n'adhère pas sur béton s'il n'y a pas de primaire, il est considéré qu'il n'y a pas d'adhérence lorsque l'adhésion est inférieure à 0.05 $N/mm^2$ ;
- allongement supérieur à 300%, mesuré selon la norme ISO 527-1 : un « oui » signifie que la membrane présente un allongement supérieur à 300%, un « non » signifie que la membrane présente un allongement inférieur à 300%.

Tableau 1 : Comparaison de différentes technologies

| **Technologie / Caractéristiques** | **Epoxy** | **Polymère SMP** | **Polyuréthanne** | **Acrylique** | **Composition selon l'invention** |
|---|---|---|---|---|---|
| Stabilité de la couleur | non | oui | oui | oui | oui |
| Résistance au déchirement | non | non | oui | oui | oui |
| Adhésion sur béton humide | oui | oui | non | non | oui |
| Adhésion sur béton sans primaire | oui | oui | non | non | oui |
| Allongement supérieur à 300% | non | oui | oui | oui | oui |
| Nombre de couches pour atteindre 1,5 mm de produit sec | 1 couche | 1 couche | 3 couches | 3 couches | 1 couche |

La membrane selon l'invention, obtenue après réticulation de la composition liquide selon l'invention, présente d'excellentes performances pour l'ensemble des caractéristiques évaluées. En particulier, sa couleur est stable, elle présente une bonne résistance au déchirement et une seule couche suffit pour obtenir une membrane de 1,5 mm d'épaisseur.

Exemple 2 : Préparation de compositions liquides

Les produits ci-dessous ont été utilisés dans les exemples dans la fabrication des compositions liquides :

- Polymère silylé (A1) :
  - MS Polymer® SAX350 disponible auprès de la Société KANEKA
- Aminosilane comme promoteur d'adhésion et agent de couplage (A3) :
  - SILQUEST® A1120 soit le N-(beta-aminoéthyl)-gamma-aminopropyltriméthoxysilane disponible auprès de la société MOMENTIVE.
- Catalyseurs aminés (A2):
  - ANCAMINE® K54 soit le 2,4,6-Tri(dimethylaminomethyl)phénol disponible auprès de la société AIR PRODUCTS.
  - BDMA soit la dimethylbenzyl amine disponible auprès de la société AIR PRODUCTS.
  - BDMA phénolique : (diméthylaminométhyl)phénol (CAS 25338-55-0).
- Résine époxy (B1) :
  - DER® 331, dérivé du diglycidyléther disponible auprès de la Société Dow.
- Catalyseur à l'étain (pour polymère silylé) (B2):
  - TIB KAT® 216 (dilaurate de dioctylétain) disponible auprès de la société TIB KAT.
- autre additif :
  - SILQUEST® A171 soit le vinyltriméthoxysilane $(CH_3O)_3SiCH=CH_2$ disponible auprès de la société MOMENTIVE.

Les exemples de compositions liquides ont été préparés selon le mode opératoire suivant :

Composition A : Dans un mélangeur sous agitation sous azote, on introduit les constituants suivant de préférence dans l'ordre suivant :

i) Polymère silylé,
ii) Catalyseur aminé,
iii) Silquest® A1120,
iv) Silquest® A171.

Les compositions A sont ensuite conditionnées dans une poche en aluminium sous vide.

Composition B : Dans un mélangeur sous agitation, on introduit les constituants suivant de préférence dans l'ordre suivant:

i) Dérivé diglycidyl éther,
ii) Catalyseur à base d'étain pour polymère silylé,
iii) eau (du robinet).

La composition B est conditionnée dans un seau métallique.

Les quantités de chacun des constituants ont été indiquées dans le tableau 2 ci-dessous.

Tableau 2 : quantités des ingrédients des compositions liquides testées

| | | |
|---|---|---|
| Composition A | SAX® 350 | 62,305 grammes |
| Composition A | Catalyseur aminé | Voir tableaux 3 et 4 ci-dessous |
| Composition A | SILQUEST® A171 | 0,620 grammes |
| Composition A | SILQUEST® A1120 | 1,245 gramme |
| Composition B | DER® 331 | 31,150 grammes |
| Composition B | TIB KAT® 216 | 1,245 gramme |
| Composition B | $H_2O$ (eau du robinet) | 0,312 grammes |

Pour la composition A, différents systèmes catalytiques (catalyseur pour l'époxy) ont été comparés, en effet, plusieurs catalyseurs aminés ont été testés. Le tableau 3 indique les catalyseurs aminés qui ont été testés pour les compositions comparatives Comp1 à Comp7. Le tableau 3 donne également la somme $\Phi(OH) + \Phi(CH_2\text{-}NR^7R^8)$ et le ratio $\Phi(OH)/\Phi(CH_2\text{-}NR^7R^8)$ tels qu'ils ont été définis précédemment dans la présente demande.

Tableau 3 : catalyseurs aminés pour l'époxy (systèmes catalytiques comparatifs)

| | Catalyseur aminé pour l'époxy (% en poids par rapport au poids total de la composition liquide) | $\Phi(OH) + \Phi(CH_2\text{-}NR^7R^8)$ (méq/g) | $\Phi(OH)/\Phi(CH_2\text{-}NR^7R^8)$ |
|---|---|---|---|
| Comp1 | 1,6% d'ANCAMINE® K54 + 6,2% de BDMA | 69,97 | 0,09 |
| Comp2 | 1,6% d'ANCAMINE® K54 + 9,2% de BDMA | 92,16 | 0,07 |
| Comp3 | 3,2% d'ANCAMINE® K54 | 48,23 | 0,33 |
| Comp4 | 3,2% d'ANCAMINE® K54 + 1,6% de phénol | 59,98 | 0,66 |
| Comp5 | 3,2% d'ANCAMINE® K54 + 5% de BDMA + 0,8% de phénol | 91,08 | 0,25 |
| Comp6 | 11% de BDMA + 3,2% de phénol | 81,35 | 0,00 |
| Comp7 | 6,2% de BDMA phénolique | 82,01 | 1,00 |
| Comp8 | 6,2% de BDMA + 1,6% de phénol | 57,60 | 0,26 |

Le tableau 4 indique les catalyseurs aminés qui ont été testés pour les compositions 1 à 3 selon l'invention. Le tableau 4 donne également la somme $\Phi(OH) + \Phi(CH_2\text{-}NR^7R^8)$ et le ratio $\Phi(OH)/\Phi(CH_2\text{-}NR^7R^8)$ tels qu'ils ont été définis précédemment dans la présente demande.

Tableau 4 : catalyseurs aminés pour l'époxy (système catalytique selon l'invention)

| | Catalyseur aminé pour l'époxy (% en poids par rapport au poids total de la composition liquide) | $\Phi$(OH) + $\Phi$ ($CH_2$-$NR^7R^8$) | $\Phi$(OH)/ $\Phi$ ($CH_2$-$NR^7R^8$) |
|---|---|---|---|
| 1 | 1,6% d'ANCAMINE® K54 + 4,8% de BDMA | 59,62 | 0,11 |
| 2 | 3,2% d'ANCAMINE® K54 + 3,2% de BDMA | 71,90 | 0,20 |
| 3 | 3,2% d'ANCAMINE® K54 + 5% de BDMA | 85,21 | 0,16 |

Exemple 3 : Evaluation des performances des compositions

Lors de l'application de la composition liquide, les deux compositions A et B sont mélangées dans un rapport 1 pour 1 en poids à l'aide d'un mélangeur à rotation équipé d'un fouet. Pour les exemples, la composition liquide est appliquée par un rouleau sur une surface anti-adhérente de type Téflon de façon à pouvoir retirer le lendemain le film durci.

Les mesures de résistance au déchirement de la membrane obtenue après réticulation de la composition liquide ont été effectuées selon la norme NF ISO 34-1 de 2010 méthode A (éprouvettes pantalons).
Trois différentes mesures de résistance au déchirement ont été effectuées :

- Test 1 : effectué 7 jours après la fabrication de la membrane, la membrane ayant été stockée à 23°C et 50% d'humidité relative durant ces 7 jours,
- Test 2 : effectué 14 jours après la fabrication de la membrane, la membrane ayant été stockée 7 jours à 23°C à l'air puis 7 jours à 80°C à l'air,
- Test 3 : Test effectué 14 jours après la fabrication de la membrane, la membrane ayant été stockée 7 jours à 23°C à l'air puis 7 jours à 80°C sous eau.

Les résultats obtenus sont indiquées dans le tableau 5 ci-dessous.

Tableau 5 : Mesures de résistance au déchirement (valeurs exprimées en N/mm)

| | Test 1 (N/mm) | Test 2 (N/mm) | Test 3 (N/mm) |
|---|---|---|---|
| Comp1 | 10 | 5,84 | 15,6 |
| Comp2 | 5 | - | - |
| Comp3 | 6,5 | 16 | 15 |
| Comp4 | 8,2 | - | - |
| Comp5 | 18 | 6 | 14,63 |
| Comp6 | 2 | - | - |
| Comp7 | 6,12 | - | - |
| Comp8 | 2,32 | - | - |
| 1 | 10,8 | 11,18 | 17,54 |
| 2 | 15,2 | 17,61 | 21,78 |
| 3 | 11,8 | 13,99 | 18,51 |

Pour obtenir une membrane ayant des propriétés satisfaisantes, il est préférable que la résistance au cisaillement soit supérieure ou égale à 10 N/mm pour chacun des tests effectués, illustrant les différentes conditions d'utilisation de la membrane d'étanchéité.

Ainsi, on observe que les compositions 1 à 3 selon l'invention permettent d'obtenir une membrane d'étanchéité qui présente une résistance au cisaillement qui soit supérieure à 10 N/mm pour tous les tests. En particulier, la composition 2 selon l'invention présente une excellente résistance au déchirement pour les trois tests (supérieure à 15 N/mm).

Au contraire, les exemples comparatifs Comp1, Comp4 et Comp7 sont des exemples où le mélange d'au moins deux catalyseurs ne satisfait pas la relation (2) $\Phi$(OH)/$\Phi$($CH_2$-$NR^7R^8$). Ces exemples ne permettent pas d'obtenir de bons résultats pour les trois tests.

L'exemple comparatif Comp3 est un exemple où la composition liquide comprend un seul catalyseur pour époxy. Cet exemple ne permet pas d'obtenir de bons résultats pour les trois tests.

L'exemple comparatif Comp5 est un exemple où le mélange d'au moins deux catalyseurs ne satisfait pas la relation (1) $\Phi(OH) + \Phi(CH_2\text{-}NR^7R^8)$. Cet exemple ne permet pas d'obtenir de bons résultats pour les trois tests.

L'exemple comparatif Comp8 est un exemple où la composition liquide ne comprend pas au moins un catalyseur de type phénolique substitué par au moins une fonction $-(CH_2)\text{-}N(R^7R^8)$, sachant que le mélange d'au moins deux catalyseurs de l'exemple Comp8 satisfait les relations (1) et (2). Cet exemple ne permet pas d'obtenir un bon résultat au test 1.

De plus, la membrane selon l'invention présente une couleur stable, pas de jaunissement au cours du temps. En outre, les compositions liquides comprenant uniquement de l'ANCAMINE® K54 à titre de catalyseur pour époxy (A2) conduisent à des membranes qui ne satisfont pas les trois tests décrits ci-dessus.

## Revendications

**1.** Composition liquide sous forme bi-composante comprenant une composition A et une composition B, ladite composition A comprenant :

A1) de 20 à 80% en poids d'au moins un polymère silylé comprenant au moins un, de préférence au moins deux groupements de formule (I) :

$$-Si(R^4)_p(OR^5)_{3-p} \qquad (I)$$

dans laquelle :

- $R^4$ et $R^5$, identiques ou différents, représentent chacun un radical alkyl linéaire ou ramifié comprenant de 1 à 4 atomes de carbone, avec la possibilité que quand il y a plusieurs radicaux $R^4$ (ou $R^5$), ces derniers soient identiques ou différents ;
- p est un nombre entier égal à 0, 1 ou 2 ;

A2) de 3 à 9% en poids d'un mélange d'au moins deux catalyseurs distincts (A2-1) et (A2-2) de type aromatique, le catalyseur (A2-1) étant de type phénolique substitué par au moins une fonction $-(CH_2)\text{-}N(R^7R^8)$, où $R^7$ et $R^8$ représentent, indépendamment l'un de l'autre, un radical alkyle linéaire ou ramifié comprenant de 1 à 4 atomes de carbone ;
A3) de 0,1 à 2% en poids d'au moins un agent de couplage entre le polymère silylé présent dans la composition A et la résine époxy présente dans la composition B ;

et ladite composition B comprenant :

B1) de 10 à 40% en poids d'au moins une résine époxy ;
B2) de 0,2 à 3% en poids d'au moins un catalyseur pour la condensation de silanol ;

les pourcentages en poids étant exprimés par rapport au poids total de la composition liquide,
le mélange d'au moins deux catalyseurs (A2-1) et (A2-2) étant choisi de sorte que les deux relations suivantes sont respectées :

$$(1)\ 48{,}00\ \text{méq/g} \leq \Phi(OH) + \Phi(CH_2\text{-}NR^7R^8) \leq\ 90{,}00\ \text{méq/g}$$

$$(2)\ 0{,}10 \leq \Phi(OH)/\Phi(CH_2\text{-}NR^7R^8) \leq\ 0{,}33$$

dans lesdites relations (1) et (2) :

- $\Phi(OH)$ représente le nombre de fonctions -OH portées par un noyau aromatique exprimé en milliéquivalent par gramme de composition liquide ;
- $\Phi(CH_2\text{-}NR^7R^8)$ représente le nombre de fonctions $-CH_2\text{-}NR^7R^8$ portées par un noyau aromatique exprimé en milliéquivalent par gramme de composition liquide.

**2.** Composition liquide selon la revendication 1, dans laquelle le polymère silylé répond à l'une des formules (II), (III)

ou (IV) :

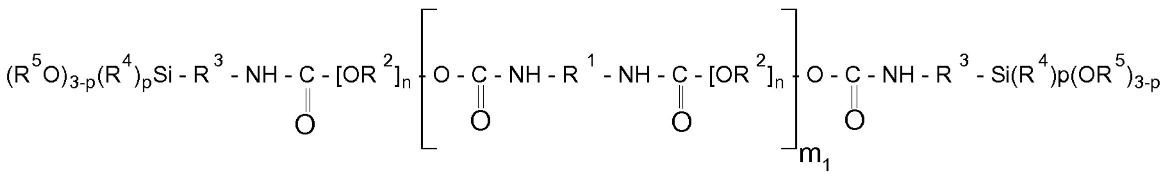

(II)

$$(R^5O)_{3-p}(R^4)_pSi - R^3 - [OR^2]_n - O - R^3 - Si(R^4)_p(OR^5)_{3-p}$$

(III)

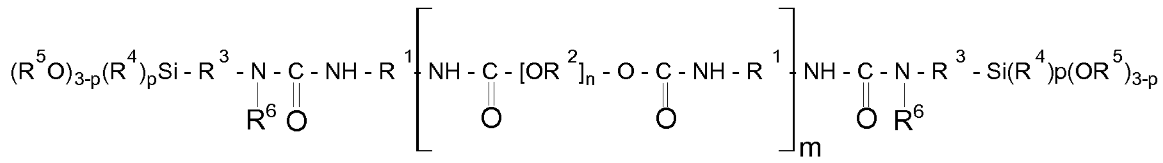

(IV)

dans lesquelles :

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone,
- $R^6$ représente un atome d'hydrogène, un radical phényle ou un radical alkyle linéaire, ramifié ou cyclique comprenant de 1 à 6 atomes de carbone,
- n est un nombre entier tel que la masse molaire moyenne du bloc polyéther de formule $-[OR^2]_n-$ va de 200 g/mole à 40000 g/mole,
- $m_1$ est zéro ou un nombre entier tel que la masse molaire moyenne du polymère va de 500 g/mole à 50000 g/mole,
- m est un nombre entier différent de zéro tel que la masse molaire moyenne du polymère va de 500 g/mole à 50000 g/mole,
- p est un nombre entier égal à 0, 1 ou 2.

**3.** Composition liquide selon l'une des revendications 1 à 2, dans laquelle le catalyseur (A2-1) comprend au moins un noyau phénolique substitué par au moins deux fonctions $-(CH_2)-N(CH_3)_2$, ces deux fonctions $-(CH_2)-N(CH_3)_2$ étant de préférence en position ortho du groupement OH.

**4.** Composition liquide selon l'une des revendications 1 à 3, dans laquelle le catalyseur (A2-1) est choisi parmi les composés suivants :

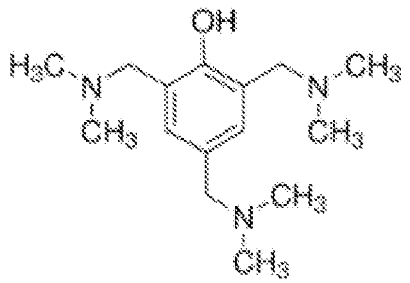

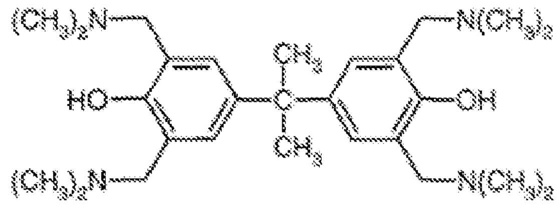

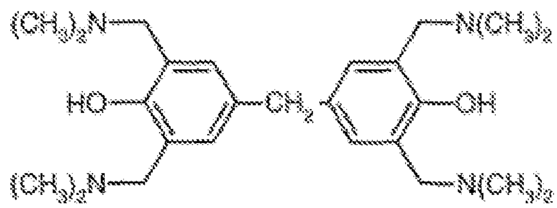

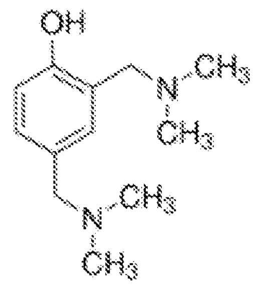

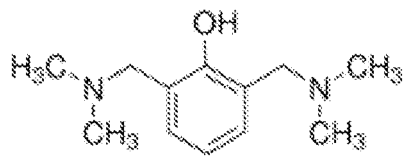

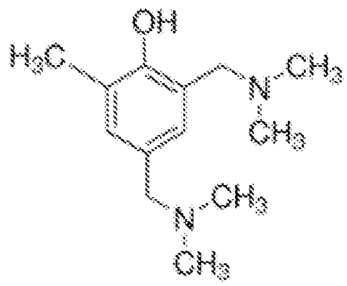

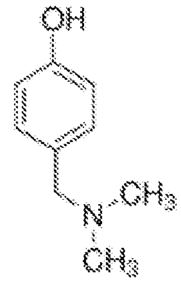

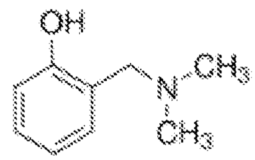

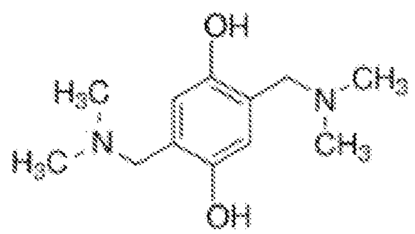

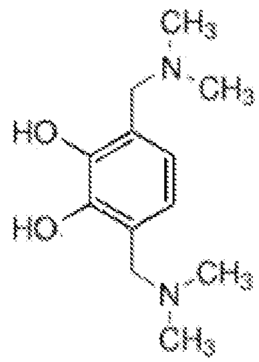

de préférence, le catalyseur (A2-1) est le composé 2,4,6-tri(diméthylaminométhyl)phénol répondant à la formule suivante :

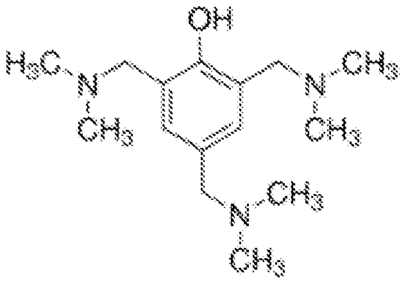

**5.** Composition liquide selon l'une des revendications 1 à 4, dans laquelle le catalyseur (A2-2) différent du catalyseur (A2-1) est choisi parmi les composés aromatiques comprenant au moins une fonction hydroxyle ou au moins une fonction $-(CH_2)-N(CH_3)_2$.

**6.** Composition liquide selon l'une des revendications 1 à 5, dans laquelle le catalyseur (A2-2) est choisi parmi les composés suivants :

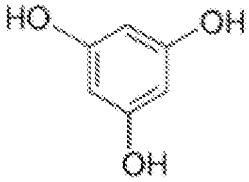 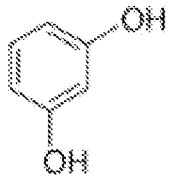 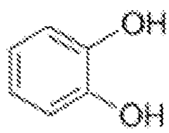 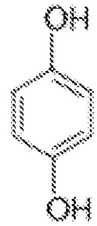

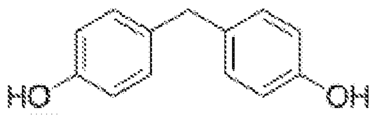 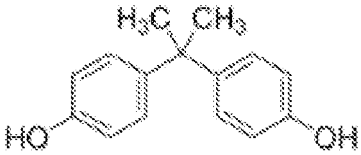

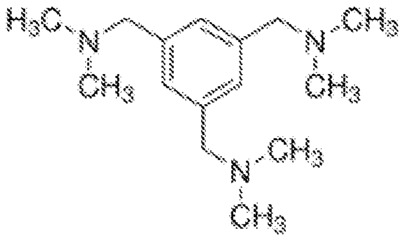 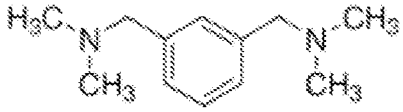

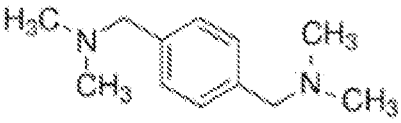 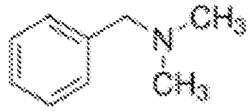

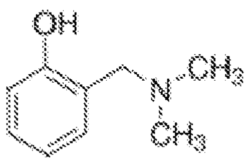

de préférence, le catalyseur (A2-2) est choisi parmi les composés suivants :

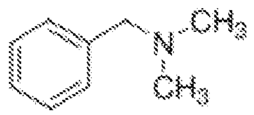 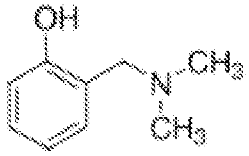 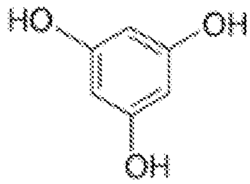

de préférence encore le catalyseur (A2-2) est le composé diméthylbenzylamine répondant à la formule suivante :

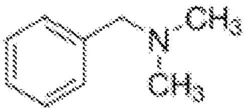

**7.** Composition liquide selon l'une des revendications 1 à 6, dans laquelle le catalyseur (A2) comprend un mélange de 2,4,6-tri(diméthylaminométhyl)phénol à titre de catalyseur (A2-1) et de diméthylbenzylamine à titre de catalyseur (A2-2).

**8.** Composition liquide selon l'une des revendications 1 à 7, dans laquelle les deux relations suivantes sont respectées :

$$(1)\ 50{,}00\ \text{méq/g} \leq \Phi(OH) + \Phi(CH_2\text{-}NR^7R^8) \leq\ 90{,}00\ \text{méq/g}$$

$$(2)\ 0{,}10 \leq \Phi(OH)/\Phi(CH_2\text{-}NR^7R^8) \leq\ 0{,}30$$

dans lesdites relations (1) et (2) :

- $\Phi$(OH) représente le nombre de fonctions -OH portées par un noyau aromatique exprimé en milliéquivalent par gramme de composition liquide ;
- $\Phi((CH_2)\text{-}N(R^7R^8)_2)$ représente le nombre de fonctions $-CH_2\text{-}NR^7R^8$ portées par un noyau aromatique exprimé en milliéquivalent par gramme de composition liquide.

**9.** Composition liquide selon l'une des revendications 1 à 8, dans laquelle la résine époxy (B1) est dérivée du diglycidyl éther, de préférence un dérivé du diglycidyl éther du bisphénol A.

**10.** Composition liquide selon l'une des revendications 1 à 9, dans laquelle l'agent de couplage (A3) est un composé bi-fonctionnel comprenant au moins une première fonction capable de réagir avec le polymère silylé (A1) et une seconde fonction capable de réagir avec la résine époxy (B1).

**11.** Kit prêt à l'emploi comprenant la composition liquide selon l'une des revendications 1 à 10, les compositions A et B étant conditionnées dans deux compartiments distincts.

**12.** Utilisation de la composition liquide selon l'une des revendications 1 à 10 ou du kit selon la revendication 11 pour la formation d'une membrane d'étanchéité.

**13.** Membrane d'étanchéité obtenue par réticulation de la composition liquide selon l'une des revendications 1 à 10.

**14.** Procédé d'étanchéification d'une surface, ledit procédé comprenant l'application puis la réticulation de la composition liquide selon l'une des revendications 1 à 10 sur ladite surface.

**15.** Surface revêtue d'une membrane selon la revendication 13.

## Patentansprüche

**1.** Flüssige Zusammensetzung in zweikomponentiger Form, umfassend eine Zusammensetzung A und eine Zusammensetzung B,

wobei die Zusammensetzung A Folgendes umfasst:

A1) 20 bis 80 Gew.-% mindestens eines Silylpolymers mit mindestens einer und vorzugsweise mindestens zwei Gruppen der Formel (I):

$$-Si(R^4)_p(OR^5)_{3-p} \quad (I)$$

in der:

- $R^4$ und $R^5$ gleich oder verschieden sind und jeweils für einen linearen oder verzweigten Alkylrest mit 1 bis 4 Kohlenstoffatomen stehen, wobei dann, wenn mehrere Reste $R^4$ (oder $R^5$) vorliegen, letztere gleich oder verschieden sein können;
- p eine ganze Zahl mit einem Wert von 0, 1 oder 2 ist;

A2) 3 bis 9 Gew.-% einer Mischung von mindestens zwei verschiedenen Katalysatoren (A2-1) und (A2-2) vom aromatischen Typ, wobei der Katalysator (A2-1) vom phenolischen Typ ist und durch mindestens eine $-(CH_2)-N(R^7R^8)$-Funktion substituiert ist, wobei $R^7$ und $R^8$ unabhängig voneinander für einen linearen oder verzweigten Alkylrest mit 1 bis 4 Kohlenstoffatomen stehen;
A3) 0,1 bis 2 Gew.-% mindestens eines Kupplungsmittels für das in der Zusammensetzung A vorliegende Silylpolymer und das in der Zusammensetzung B vorliegende Epoxidharz;

und wobei die Zusammensetzung B) Folgendes umfasst:

B1) 10 bis 40 Gew.-% mindestens eines Epoxidharzes;
B2) 0,2 bis 3 Gew.-% mindestens eines Katalysators für die Silanolkondensation;

wobei sich die Gewichtsprozentangaben auf das Gesamtgewicht der flüssigen Zusammensetzung beziehen, wobei die Mischung von mindestens zwei Katalysatoren (A2-1) und (A2-2) so gewählt ist, dass die folgenden zwei Beziehungen erfüllt sind:

$$(1) \quad 48{,}00 \text{ meq/g} \leq \Phi(OH) + \Phi(CH_2-NR^7R^8) \leq 90{,}00 \text{ meq/g}$$

$$(2) \quad 0{,}10 \leq \Phi(OH)/\Phi(CH_2-NR^7R^8) \leq 0{,}33,$$

wobei in den Beziehungen (1) und (2):

- $\Phi(OH)$ für die Zahl der -OH-Funktionen eines aromatischen Kerns, ausgedrückt in Milliäquivalenten pro Gramm flüssige Zusammensetzung, steht;
- $\Phi(CH_2-NR^7R^8)$ für die Zahl der $-CH_2-NR^7R^8$-Funktionen eines aromatischen Kerns, ausgedrückt in Milliäquivalenten pro Gramm flüssige Zusammensetzung, steht.

**2.** Flüssige Zusammensetzung nach Anspruch 1, wobei das Silylpolymer einer der Formeln (II), (III) oder (IV) entspricht:

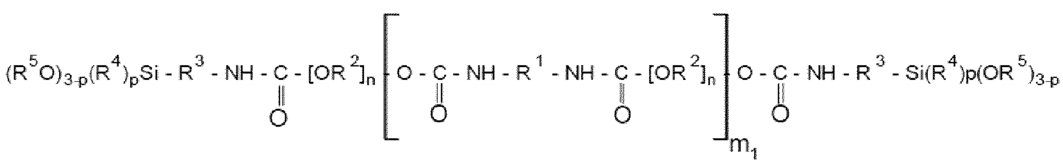

(II)

$$(R^5O)_{3-p}(R^4)_pSi - R^3 - [OR^2]_n - O - R^3 - Si(R^4)_p(OR^5)_{3-p}$$

(III)

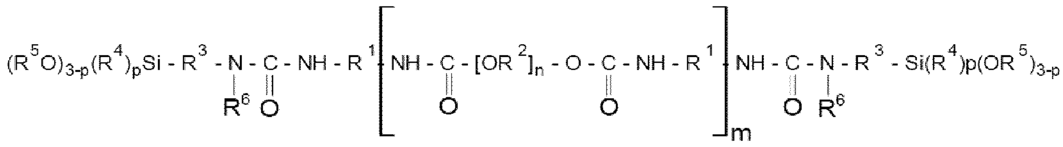

(IV)

in denen:

- $R^1$ für einen zweiwertigen Kohlenwasserstoffrest mit 5 bis 15 Kohlenstoffatomen steht, der aromatisch oder aliphatisch, linear, verzweigt oder cyclisch sein kann,
- $R^3$ für einen linearen oder verzweigten zweiwertigen Alkylenrest mit 1 bis 6 Kohlenstoffatomen steht,
- $R^2$ für einen linearen oder verzweigten zweiwertigen Alkylenrest mit 2 bis 4 Kohlenstoffatomen steht,
- $R^4$ und $R^5$ gleich oder verschieden sind und jeweils für einen linearen oder verzweigten Alkylrest mit 1 bis 4 Kohlenstoffatomen stehen,
- $R^6$ für ein Wasserstoffatom, einen Phenylrest oder einen linearen, verzweigten oder cyclischen Alkylrest mit 1 bis 6 Kohlenstoffatomen steht,
- n eine solche ganze Zahl ist, dass die mittlere Molmasse des Polyetherblocks der Formel $-[OR^2]_n$-im Bereich von 200 g/mol bis 40.000 g/mol liegt,
- $m_1$ null ist oder eine solche ganze Zahl ist, dass die mittlere Molmasse des Polymers im Bereich von 500 g/mol bis 50.000 g/mol liegt,
- m eine solche von null verschiedene ganze Zahl ist, dass die mittlere Molmasse des Polymers im Bereich von 500 g/mol bis 50.000 g/mol liegt,
- p eine ganze Zahl mit einem Wert von 0, 1 oder 2 ist.

**3.** Flüssige Zusammensetzung nach einem der Ansprüche 1 bis 2, wobei der Katalysator (A2-1) mindestens einen Phenolkern, der durch mindestens zwei $-(CH_2)-N(CH_3)_2$-Funktionen substituiert ist, umfasst, wobei diese zwei $-(CH_2)-N(CH_3)_2$-Funktionen vorzugsweise in der ortho-Position zur OH-Gruppe stehen.

**4.** Flüssige Zusammensetzung nach einem der Ansprüche 1 bis 3, wobei der Katalysator (A2-1) aus den folgenden Verbindungen ausgewählt ist:

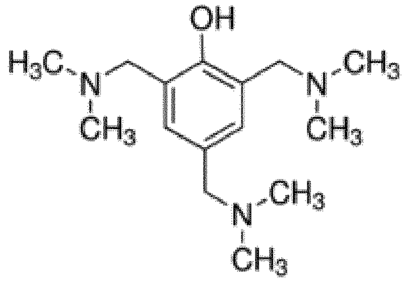

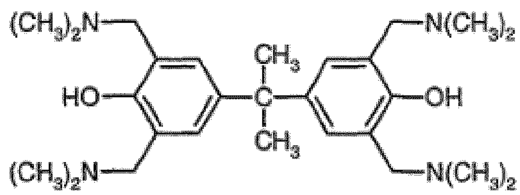

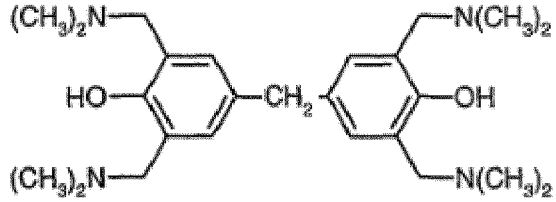

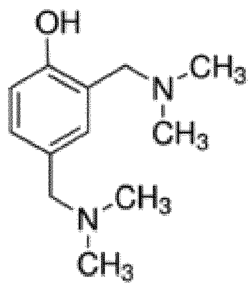

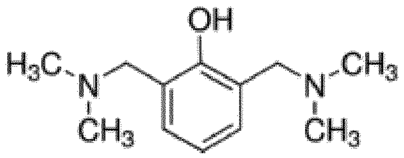

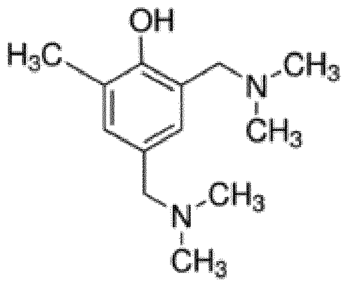

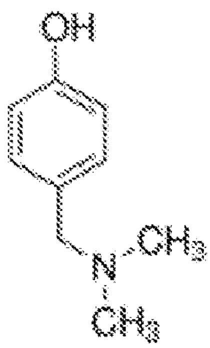

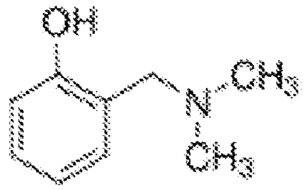

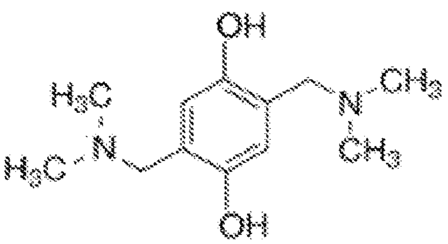

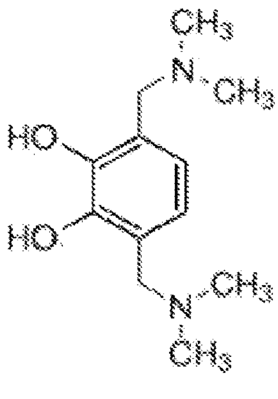

vorzugsweise es sich bei dem Katalysator (A2-1) um die Verbindung 2,4,6-Tri(dimethylaminomethyl)-phenol handelt, die der folgenden Formel entspricht:

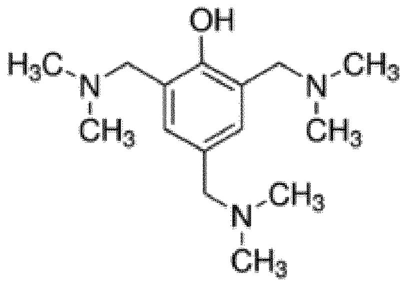

**5.** Flüssige Zusammensetzung nach einem der Ansprüche 1 bis 4, wobei der von dem Katalysator (A2-1) verschiedene Katalysator (A2-2) aus aromatischen Verbindungen mit mindestens einer Hydroxylfunktion oder mindestens einer $-(CH_2)-N(CH_3)_2$-Funktion ausgewählt ist.

**6.** Flüssige Zusammensetzung nach einem der Ansprüche 1 bis 5, wobei der Katalysator (A2-2) aus den folgenden Verbindungen ausgewählt ist:

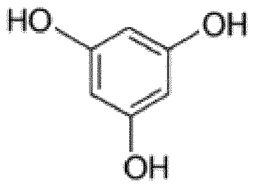
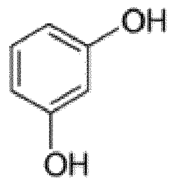
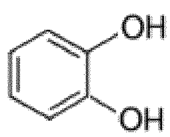
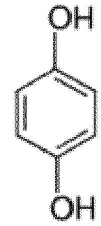

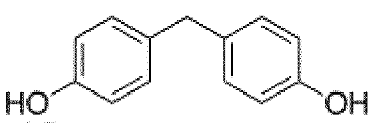
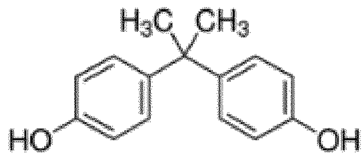

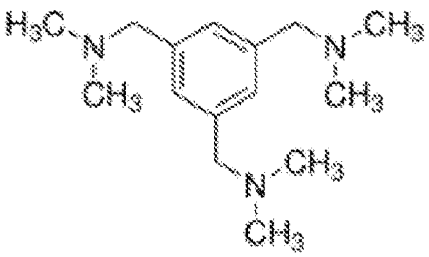
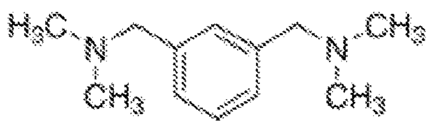

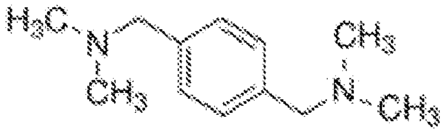
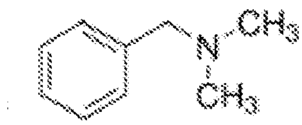

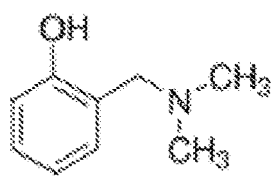

vorzugsweise der Katalysator (A2-2) aus den folgenden Verbindungen ausgewählt ist:

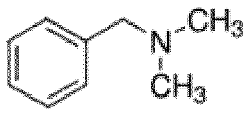 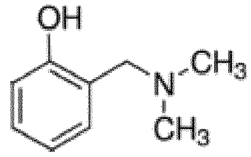 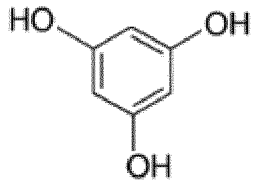

weiter bevorzugt es sich bei dem Katalysator (A2-2) um die Verbindung Dimethylbenzylamin handelt, die der folgenden Formel entspricht:

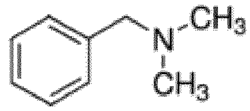

**7.** Flüssige Zusammensetzung nach einem der Ansprüche 1 bis 6, wobei der Katalysator (A2) eine Mischung von 2,4,6-Tri(dimethylaminomethyl)phenol als Katalysator (A2-1) und Dimethylbenzylamin als Katalysator (A2-2) umfasst.

**8.** Flüssige Zusammensetzung nach einem der Ansprüche 1 bis 7, wobei die folgenden zwei Beziehungen erfüllt sind:

$$(1)\quad 50{,}00\ \text{meq/g} \leq \Phi(OH) + \Phi(CH_2\text{-}NR^7R^8) \leq 90{,}00\ \text{meq/g}$$

$$(2)\quad 0{,}10 \leq \Phi(OH)/\Phi(CH_2\text{-}NR^7R^8) \leq 0{,}30,$$

wobei in den Beziehungen (1) und (2):

- $\Phi(OH)$ für die Zahl der -OH-Funktionen eines aromatischen Kerns, ausgedrückt in Milliäquivalenten pro Gramm flüssige Zusammensetzung, steht;
- $\Phi((CH_2)\text{-}N(R^7R^8)_2)$ für die Zahl der $-CH_2\text{-}NR^7R^8$-Funktionen eines aromatischen Kerns, ausgedrückt in Milliäquivalenten pro Gramm flüssige Zusammensetzung, steht.

**9.** Flüssige Zusammensetzung nach einem der Ansprüche 1 bis 8, wobei sich das Epoxidharz (B1) von Diglycidylether, vorzugsweise einem Derivat von Bisphenol-A-diglycidylether, ableitet.

**10.** Flüssige Zusammensetzung nach einem der Ansprüche 1 bis 9, wobei es sich bei dem Kupplungsmittel (A3) um eine bifunktionelle Verbindung mit mindestens einer ersten Funktion, die mit dem Silylpolymer (A1) reagieren kann, und einer zweiten Funktion, die mit dem Epoxidharz (B1) reagieren kann, handelt.

**11.** Gebrauchsfertiges Kit, umfassend die flüssige Zusammensetzung nach einem der Ansprüche 1 bis 10, wobei die Zusammensetzungen A und B in zwei separaten Kompartimenten verpackt sind.

**12.** Verwendung der flüssigen Zusammensetzung nach einem der Ansprüche 1 bis 10 oder des Kits nach Anspruch 11 zur Bildung einer Abdichtungsmembran.

**13.** Abdichtungsmembran, erhalten durch Vernetzung der flüssigen Zusammensetzung nach einem der Ansprüche 1 bis 10.

**14.** Verfahren zum Abdichten einer Oberfläche, bei dem man die flüssige Zusammensetzung nach einem der Ansprüche 1 bis 10 auf die Oberfläche aufbringt und dann darauf vernetzt.

**15.** Oberfläche, beschichtet mit einer Membran nach Anspruch 13.

## Claims

**1.** Liquid composition in two-component form comprising a composition A and a composition B, said composition A comprising:

A1) from 20% to 80% by weight of at least one silylated polymer comprising at least one, preferably at least two groups of formula (I):

$$-Si(R^4)_p(OR^5)_{3-p} \qquad (I)$$

wherein:

- $R^4$ and $R^5$, which are identical or different, each represent a linear or branched alkyl radical comprising from 1 to 4 carbon atoms, with the possibility that when there are several $R^4$ (or $R^5$) radicals, the latter are identical or different;
- p is an integer equal to 0, 1 or 2;

A2) from 3% to 9% by weight of a mixture of at least two different aromatic-type catalysts (A2-1) and (A2-2), the catalyst (A2-1) being of phenolic type substituted by at least one - $(CH_2)$-$N(R^7R^8)$ function, where $R^7$ and $R^8$ represent, independently of one another, a linear or branched alkyl radical comprising from 1 to 4 carbon atoms;
A3) from 0.1% to 2% by weight of at least one coupling agent for coupling between the silylated polymer present in the composition A and the epoxy resin present in the composition B;

and said composition B comprising:

B1) from 10% to 40% by weight of at least one epoxy resin;
B2) from 0.2% to 3% by weight of at least one silanol condensation catalyst;

the percentages by weight being expressed relative to the total weight of the liquid composition,
the mixture of at least two catalysts (A2-1) and (A2-2) being chosen so that the following two relationships are respected:

$$(1) \qquad 48.00\ meq/g \leq \Phi(OH) + \Phi(CH_2\text{-}NR^7R^8) \leq 90.00\ meq/g$$

$$(2) \qquad 0.10 \leq \Phi(OH)/\Phi(CH_2\text{-}NR^7R^8) \leq 0.33$$

in said relationships (1) and (2):

- $\Phi$(OH) represents the number of -OH functions borne by an aromatic ring expressed in milliequivalents per gram of liquid composition;
- $\Phi(CH_2\text{-}NR^7R^8)$ represents the number of $-CH_2\text{-}NR^7R^8$ functions borne by an aromatic ring expressed in milliequivalents per gram of liquid composition.

**2.** Liquid composition according to Claim 1, wherein the silylated polymer corresponds to one of the formulae (II), (III) or (IV):

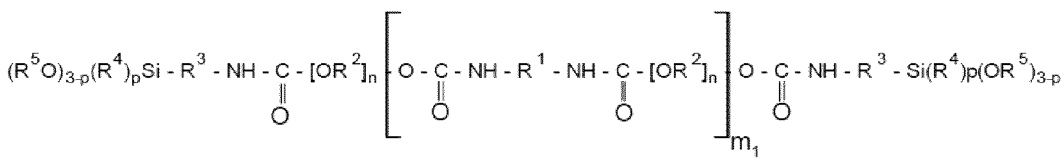

(II)

$$(R^5O)_{3-p}(R^4)_pSi - R^3 - [OR^2]_n - O - R^3 - Si(R^4)_p(OR^5)_{3-p}$$

(III)

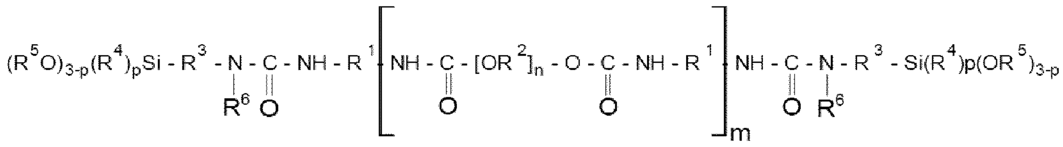

(IV)

wherein:

- $R^1$ represents a hydrocarbon-based divalent radical comprising from 5 to 15 carbon atoms, which may be aromatic or aliphatic, linear, branched or cyclic,
- $R^3$ represents a linear or branched alkylene divalent radical comprising from 1 to 6 carbon atoms,
- $R^2$ represents a linear or branched alkylene divalent radical comprising from 2 to 4 carbon atoms,
- $R^4$ and $R^5$, which are identical or different, each represent a linear or branched alkyl radical comprising from 1 to 4 carbon atoms,
- $R^6$ represents a hydrogen atom, a phenyl radical or a linear, branched or cyclic alkyl radical comprising from 1 to 6 carbon atoms,
- n is an integer such that the average molar mass of the polyether block of formula $-[OR^2]_n-$ ranges from 200 g/mol to 40 000 g/mol,
- $m_1$ is zero or an integer such that the average molar mass of the polymer ranges from 500 g/mol to 50 000 g/mol,
- m is an integer other than zero such that the average molar mass of the polymer ranges from 500 g/mol to 50 000 g/mol,
- p is an integer equal to 0, 1 or 2.

**3.** Liquid composition according to either of Claims 1 and 2, wherein the catalyst (A2-1) comprises at least one phenolic ring substituted by at least two $-(CH_2)-N(CH_3)_2$ functions, these two $-(CH_2)-N(CH_3)_2$ functions preferably being in the ortho position to the OH group.

**4.** Liquid composition according to one of Claims 1 to 3, wherein the catalyst (A2-1) is chosen from the following compounds:

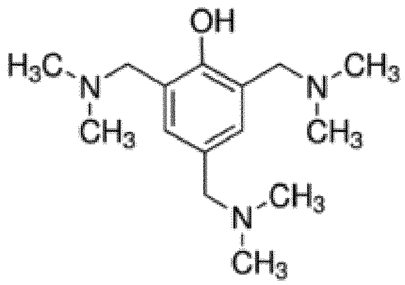

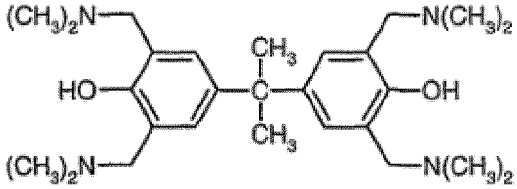

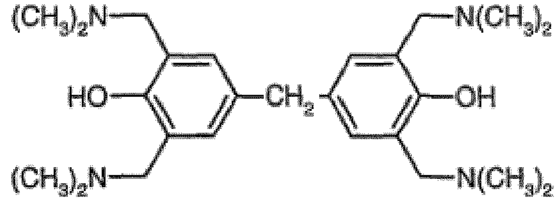

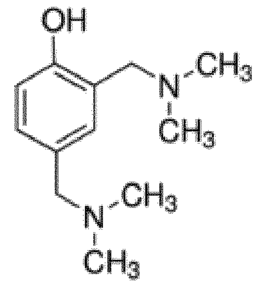

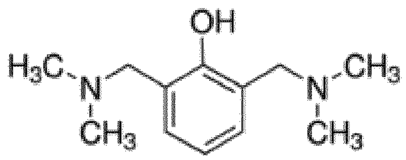

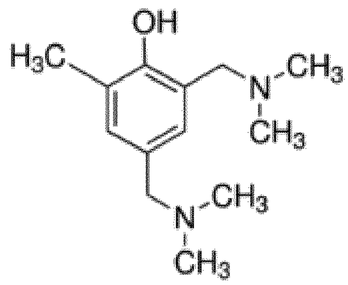

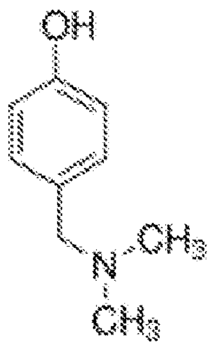

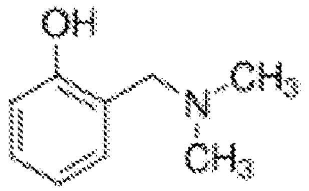

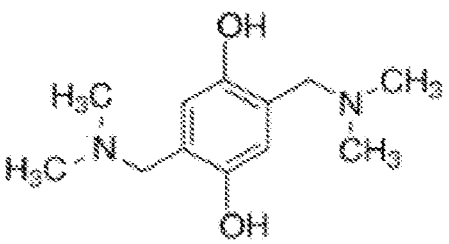

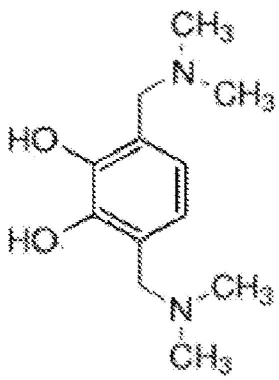

preferably, the catalyst (A2-1) is the compound 2,4,6-tri(dimethylaminomethyl)phenol corresponding to the following formula:

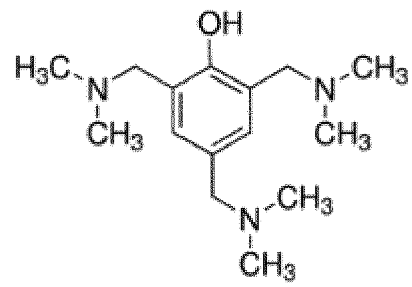

5. Liquid composition according to one of Claims 1 to 4, wherein the catalyst (A2-2) different from the catalyst (A2-1) is chosen from the aromatic compounds comprising at least one hydroxyl function or at least one $-(CH_2)-N(CH_3)_2$ function.

6. Liquid composition according to one of Claims 1 to 5, wherein the catalyst (A2-2) is chosen from the following compounds:

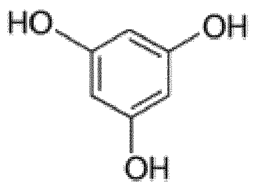
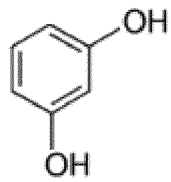
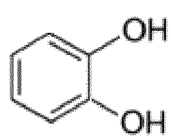
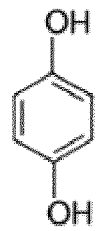

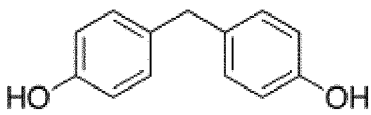
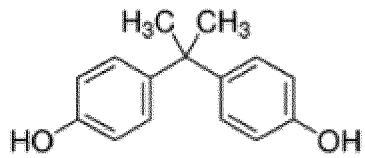

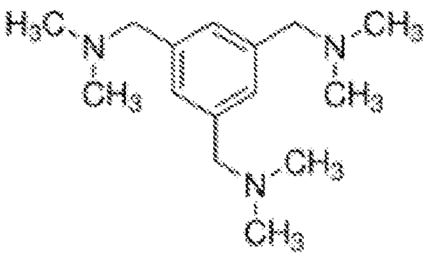
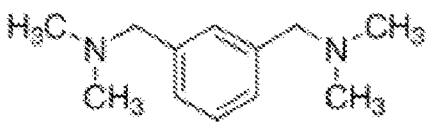

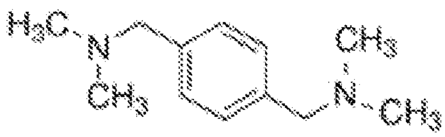
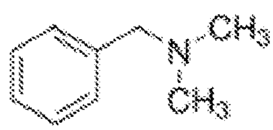

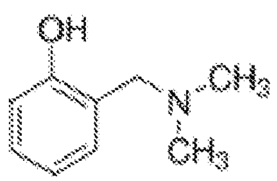

preferably, the catalyst (A2-2) is chosen from the following compounds:

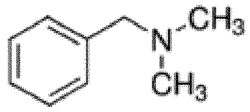 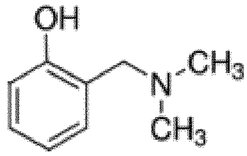 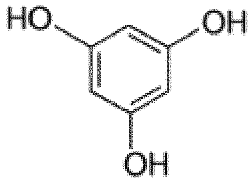

more preferably again, the catalyst (A2-2) is the dimethylbenzylamine compound corresponding to the following formula:

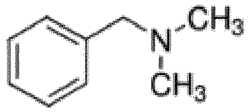

**7.** Liquid composition according to one of Claims 1 to 6, wherein the catalyst (A2) comprises a mixture of 2,4,6-tri(dimethylaminomethyl)phenol as catalyst (A2-1) and of dimethylbenzylamine as catalyst (A2-2).

**8.** Liquid composition according to one of Claims 1 to 7, wherein the following two relationships are respected:

$$(1) \quad 50.00\ \text{meq/g} \leq \Phi(OH) + \Phi(CH_2\text{-}NR^7R^8) \leq 90.00\ \text{meq/g}$$

$$(2) \quad 0.10 \leq \Phi(OH)/\Phi(CH_2\text{-}NR^7R^8) \leq 0.30$$

in said relationships (1) and (2):

- $\Phi(OH)$ represents the number of -OH functions borne by an aromatic ring expressed in milliequivalents per gram of liquid composition;
- $\Phi((CH_2)\text{-}N(R^7R^8)_2)$ represents the number of $-CH_2\text{-}NR^7R^8$ functions borne by an aromatic ring expressed in milliequivalents per gram of liquid composition.

**9.** Liquid composition according to one of Claims 1 to 8, wherein the epoxy resin (B1) is derived from diglycidyl ether, preferably a derivative of bisphenol A diglycidyl ether.

**10.** Liquid composition according to one of Claims 1 to 9, wherein the coupling agent (A3) is a bifunctional compound comprising at least one first function capable of reacting with the silylated polymer (A1) and one second function capable of reacting with the epoxy resin (B1).

**11.** Ready-to-use kit comprising the liquid composition according to one of Claims 1 to 10, the compositions A and B being packaged in two separate compartments.

**12.** Use of the liquid composition according to one of Claims 1 to 10 or of the kit according to Claim 11 for the formation of a waterproofing membrane.

**13.** Waterproofing membrane obtained by crosslinking the liquid composition according to one of Claims 1 to 10.

**14.** Process for waterproofing a surface, said process comprising the application then the crosslinking of the liquid composition according to one of Claims 1 to 10 on said surface.

**15.** Surface coated with a membrane according to Claim 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114639 A
- JP 2012246665 A
- EP 2336208 A
- WO 2009106699 A
- EP 1829928 A


### Littérature non-brevet citée dans la description


- *CHEMICAL ABSTRACTS,* 25338-55-0